# EUROPEAN PATENT APPLICATION

(11) **EP 1 607 445 A1**
(43) Date of publication of application: **21.12.2005**
(21) Application number: 04722727.7
(22) Date of filing: 23.03.2004
(51) Int. Cl.: C09B 47/24, C09D 11/00, B41J 2/01

(54) **CYAN DYE FOR INK-JET**

(30) Priority: 24.03.2003 JP 2003080072; 28.03.2003 JP 2003090485
(71) Applicant: NIPPON KAYAKU KABUSHIKI KAISHA, Tokyo 102-8172 (JP)
(72) Inventor: FUJII, Takafumi, c/o Nippon Kayaku K.K., Kita-ku, Tokyo 115-0042 (JP); KITAYAMA, Hirokazu, c/o Nippon Kayaku K.K., Kita-ku, Tokyo 115-0042 (JP); NAMBA, Shinichi, c/o Nippon Kayaku K.K., Kita-ku, To kyo 115-0042 (JP)
(74) Representative: Gille Hrabal Struck Neidlein Prop Roos
(86) International application number: PCT/JP2004/003935
(87) International publication number: WO 2004/085541

(57) **Abstract**

The present invention relates to a phthalocyanine colorant **characterized in that** it has, as substituents, at least one unsubstituted sulfamoyl group and at least one substituted sulfamoyl group, the total number of these groups being 2 to 4, and the unsubstituted sulfamoyl group and the substituted sulfamoyl group are bonded to the phthalocyanine ring at the β-position. Said phthalocyanine colorant is suitable for use in an ink, especially a cyan ink, for an ink-jet printer. A printed matter obtained by printing with said ink is excellent in light fastness, ozone fastness and moisture fastness.

## Description

### Technical Field

The present invention relates to a phthalocyanine colorant, an ink, an ink set, an ink-jet recording method using the ink or the ink set, a colored product and a method for producing the phthalocyanine colorant.

### Background of the Invention

Lately in the field of an image recording material, particularly, a material for forming a color image has been prevalently used, including specifically such as an ink-jet recording material, an image recording material of heat-sensitive transcription type, a recording material using an electronic photography method, a silver halide photosensitive material of transcription type, a printing ink and a recording pen. For LCD and PDP in a display field and for electronic parts of CCD in the field of a movie camera, a color filter is used. In these color image recording materials and color filters, to reproduce or record a full-colored image, a colorant (dye and pigment) of so-called three primary colors in an additive color-mixing method or a subtractive color-mixing method is used. At present, however, a colorant having absorption characteristics to realize a desirable color-reproducing range and fastness to various conditions of use is not actually available and improvement is strongly required.

An ink-jet recording method has rapidly become prevalent and is developing further because of an inexpensive material, high-speed recording capability, low noise in recording and easy color recording. A method for ink-jet recording includes a continuous method to spray liquid droplets continuously and an on-demand method to spray liquid droplets according to an image information signal. A method for discharging the liquid droplets includes such as a method for discharging liquid droplets by pressurization using piezoelectric elements, a method for discharging liquid droplets by generation of bubbles in an ink by heating, a method for using an ultrasonic wave and a method for sucking and discharging liquid droplets by static electricity force. An ink suitable for ink-jet recording includes, for example, a water-based ink, an oil-based ink and a solid (melt type) ink.

A colorant to be used for the ink suitable for such ink-jet recording is required to have high solubility or dispersibility in a solvent, to be capable of high-concentration recording, to have good hue, to have satisfactory fastness against light, heat and an active gas (for example, an oxidizing gas such as NOₓ and ozone, and SOₓ) in the environment, to have superior fastness against water and chemicals, to have good fixation on a recording material with little blurring, to be superior in shelf life as an ink, to be free from toxicity and further to be available at a low price. In particular, such a cyan colorant has been strongly desired as has good cyan hue, along with excellent light fastness (durability to light), ozone fastness (durability to ozone gas) and moisture fastness (durability under high humidity) and free from bronze phenomenon (also called bronzing phenomenon). Bronze phenomenon means phenomenon that a colorant glares like metal chips on the surface of a glossy paper, and the like caused by colorant association or insufficient absorption of an ink. This phenomenon impairs gloss, print quality and print concentration.

Typical structure of a water-soluble cyan colorant to be used for an ink suitable for ink-jet recording include phthalocyanines and triphenylmethanes. A typical phthalocyanine series colorant reported and used most widely includes the following phthalocyanine derivatives classified into the following A to H.
A: A known phthalocyanine series colorant such as Direct Blue 86, Direct Blue 87, Direct Blue 199, Acid Blue 249 and Reactive Blue 71. [for example, Cu-Pc-(SO₃Na)m: a mixture wherein m = 1 to 4].
B: A phthalocyanine series colorant disclosed in JP Laid-Open No. 190273/1987 (Literature 1), JP Laid-Open No.138511/1995 (Literature 2), JP Laid-Open No.105349/2002 (Literature 3) and the like [for example, Cu-Pc-(SO₃Na)m(SO₂NH₂)n : a mixture wherein m + n = 1 to 4].
C: A phthalocyanine series colorant disclosed in JP Laid-Open No.171085/1993 (Literature 4) and the like [for example, Cu-Pc-(CO₂H)ₘ(CONR₁R₂)ₙ: m + n = 0 to 4].
D: A phthalocyanine series colorant disclosed in JP Laid-Open No.140063/1998 (Literature 5) and the like [for example, Cu-Pc-(SO₃H)ₘ(SO₂NR₁R₂)ₙ: m + n = 0 to 4; and m ≠ 0].
E: A phthalocyanine series colorant disclosed in JP Laid-Open No.515048/1999 (Literature 6) and the like [for example, Cu-Pc-(SO₃H)₁(SO₂NH₂)ₘ(SO₂NR₁R₂)ₙ : l + m + n = 0 to 4].
F: A phthalocyanine series colorant disclosed in JP Laid-Open No. 22967/1984 (Literature 7) and the like [for example, Cu-Pc-(SO₂NR₁R₂)ₙ: n = 1 to 5].
G: A phthalocyanine series colorant disclosed in JP Laid-Open No. 303009/2000 (Literature 8), JP-A-2002-249677/2002 (Literature 9) and the like [a phthalocyanine compound with substituents at controlled positions, a phthalocyanine series colorant with substituents at the β-position: On the β-position, see description at the later section].
H: A phthalocyanine series colorant having a pyridine ring disclosed in JP Laid-Open No. 34758/2003 (Literature 10) and the like.

A phthalocyanine series colorant used prevalently today and represented by Direct Blue 86 or Direct Blue 199 is characterized by having superior light fastness to a generally known magenta dye or yellow dye. A phthalocyanine series colorant gives a greenish hue under acidic conditions, and thus is not very preferable as a cyan ink. Therefore, when these dyes are used as a cyan ink, it is preferable to use them under neutral to basic conditions. However, even when an ink is used in neutral to basic conditions, hue of a printed material possibly undergoes a big change on an acid recording paper.

Moreover, an oxidizing gas such as a nitrogen oxide gas and ozone that is often writing up lately as an environmental issue causes the color to change to a greenish hue and to fade, and optical density of printing to deteriorate.

On the other hand, a triphenylmethane series dye is much inferior in light fastness, ozone fastness and moisture fastness although its hue is good.

With increase in application field being used in a display such as an advertisement in the future, leading to more chances of getting exposed to light and active gases in the environment, such an inexpensive colorant and ink will be more and more required as has good hue and superior fastness against light and an active gas (for example, an oxidizing gas such as NOₓ and ozone, and SOₓ) in the environment. However, it is difficult to develop such a cyan colorant (for example, phthalocyanine series colorant) and a cyan ink as satisfies these requirements at a high level. Although a phthalocyanine series colorants with active-gas fastness have been disclosed so far in the above Literatures 3 and 8 to 10 and JP Laid-Open No.80762/2002 (Literature 11), such a cyan colorant and a cyan ink have not yet been obtained as can satisfy all qualities such as hue, light fastness, ozone fastness and moisture fastness and be produced at a low cost. Accordingly, market requirements have not yet been satisfied sufficiently.

A subject of the present invention is to solve the above conventional problems and attain the following object. Specifically, an object of the present invention is to provide a novel phthalocyanine colorant that has good hue as a cyan ink and is superior in light fastness, ozone fastness and moisture fastness, an ink suitable for an ink-jet using said phthalocyanine colorant and an ink-jet recording method.

### Disclosure of the Invention

After studying in detail phthalocyanine series colorants having good hue, excellent light fastness and ozone fastness, the present inventors have found that the above problems can be solved by using a specific phthalocyanine series colorant as a colorant for an ink and thus have completed the present invention. In more detail, the present invention relates to a metallo phthalocyanine colorant represented by Formula (1) as shown below, having both a substituted sulfamoyl group and an unsubstituted sulfamoyl group at a specific substitution position (β-position: to be described later), and the present inventors have found that said colorant has good cyan hue and like and is superior in light fastness (durability to light), moisture fastness (durability under high humidity) and also ozone fastness (durability to ozone gas) and have completed the present invention. The present invention will be described in detail hereinbelow:
1. A phthalocyanine colorant represented by Formula (1): 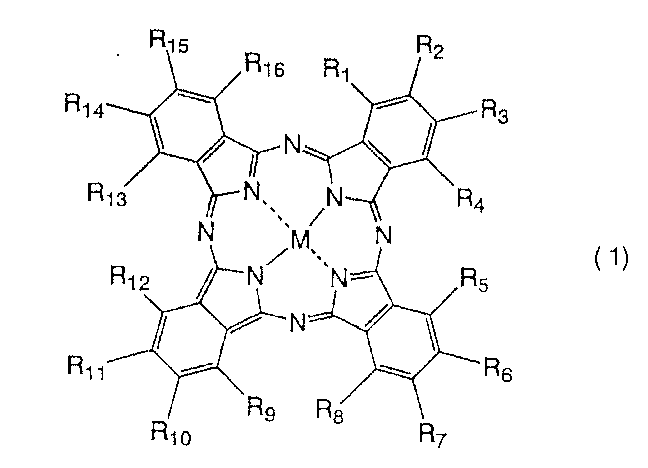 [in Formula (1), M represents a hydrogen atom, a metal atom, a metal oxide, a metal hydroxide, or a metal halide; R₂, R₃, R₆, R₇, R₁₀, R₁₁, R₁₄ and R₁₅ each independently represent an unsubstituted sulfamoyl group represented by Formula (2), a substituted sulfamoyl group represented by Formula (3), or a hydrogen atom, provided that at least one of R₂, R₃, R₆, R₇, R₁₀, R₁₁, R₁₄ and R₁₅ is an unsubstituted sulfamoyl group, and at least one thereof is a substituted sulfamoyl group represented by Formula (3); and R₁, R₄, R₅, R₈, R₉, R₁₂, R₁₃ and R₁₆ represent hydrogen atoms; the sum of a number of an unsubstituted sulfamoyl group and a number of a substituted sulfamoyl group is 2 to 4, and a number of an unsubstituted sulfamoyl group is 1 to 3 and a number of a substituted sulfamoyl group is 1 to 3.]:

   ―SO₂NH₂ (2)

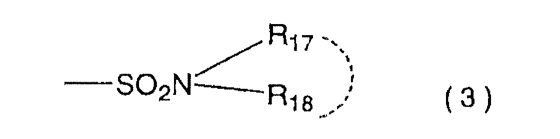

   [in Formula (3), R₁₇ and R₁₈ each independently represent a hydrogen atom, a substituted or unsubstituted alkyl group, a substituted or unsubstituted cycloalkyl group, a substituted or unsubstituted aralkyl group, a substituted or unsubstituted aryl group, a substituted or unsubstituted heterocyclic group, and a substituted or unsubstituted alkenyl group; R₁₇ and R₁₈ may form a ring by bonding together except when both R₁₇ and R₁₈ represent a halogen atom; and at least one of R₁₇ and R₁₈ has an ionic and hydrophilic group as a substituent.]
2. The phthalocyanine colorant according to the above 1,
   wherein Formula (1) according to the above 1 wherein M is Cu, is represented by Formula (4): 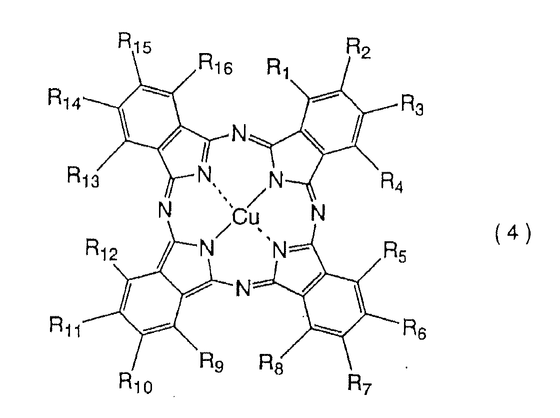 [in Formula (4), R₁ to R₁₆ mean the same as in Formula (1)].
3. The phthalocyanine colorant according to the above 1 or 2, wherein in each of combinations of R₂ and R₃, R₆ and R₇ , R₁₀ and R₁₁, and R₁₄ and R₁₅, one member of each combination is a hydrogen atom, and the other is an unsubstituted sulfamoyl group represented by Formula (2), a substituted sulfamoyl group represented by Formula (3) or a hydrogen atom, and among R₂, R₃, R₆, R₇, R₁₀, R₁₁, R₁₄ and R₁₅, at least one is an unsubstituted sulfamoyl group and at least one is a substituted sulfamoyl group represented by Formula (3).
4. The phthalocyanine colorant according to any one of the above 1 to 3, wherein R₁₇ and R₁₈ each independently represent a hydrogen atom, an alkyl group (which may be substituted with a substituent selected from a group consisting of a sulfonic acid group, a carboxyl group, a hydroxyl group, an alkoxyl group, a dialkylamino group, an arylamino group, an aryl group, a halogen atom and a cyano group), a phenyl group (which may be substituted with one or more a substituents selected from a group consisting of a sulfonic acid group, a carboxyl group, a hydroxyl group, a dialkylamino group, an arylamino group, an acetylamino group, a ureido group, an alkyl group, an alkoxyl group, a nitro group, a cyano group, a heterocyclic group and a halogen atom), a naphthyl group (which may be substituted with a sulfonic acid group or a hydroxyl group), a benzyl group (which may be substituted with a sulfonic acid group) and a phenethyl group (which may be substituted with a sulfonic acid group).
5. The phthalocyanine colorant according to any one of the above 1 to 3, wherein R₁₇ is a hydrogen atom, a carboxyl(C1 to C5) alkyl group, a (C1 to C5) alkyl group, a hydroxyl (C1 to C5) alkyl group and a sulfo (C1 to C5)alkyl group; and R₁₈ is a phenyl group having a sulfo (C1 to C5) alkyl group, a carboxyl (C1 to C5) alkyl group, a sulfonic acid group, a carboxyl group or a hydroxyl group, a benzotriazolyl group substituted with a phenyl group having a di(sulfo(C1 to C5)alkyl) amino(C1 to C5)alkyl group, a sulfonic acid group, a carboxyl group or a hydroxyl group, a phenyl group substituted with a benzotriazol group having a sulfonic acid group, a carboxyl group or a hydroxyl group, a naphthyl group having a sulfonic acid group or a hydroxyl group, a uracil group having a sulfonic acid group, a carboxyl group or a hydroxyl group, a triazol group having a sulfonic acid group, a carboxyl group or a hydroxyl group, a thiazolyl group having a sulfonic acid group, a carboxyl group or a hydroxyl group, a benzothiazolyl group having a sulfonic acid group, a carboxyl group or a hydroxyl group, a pyridine group having a sulfonic acid group, a carboxyl group or a hydroxyl group, and a benzimidazolyl group having a sulfonic acid group, a carboxyl group or a hydroxyl group.
6. The phthalocyanine colorant according to the above 1,
   wherein content of the colorant represented by Formula (1) is at least not less than 60% based on total colorants.
7. The phthalocyanine colorant according to any one of the above 1 to 5, wherein the colorant represented by Formula (1) is obtained by subjecting the phthalocyanine colorant represented by Formula (5): 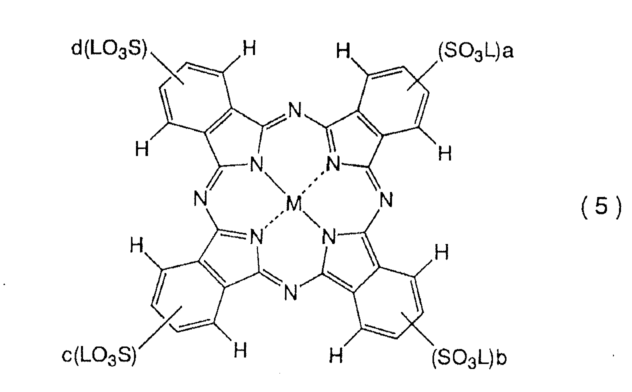 (in Formula (5), respectively, M represents a hydrogen atom, a metal atom, a metal oxide or a metal halide; L represents a proton, an alkaline metal ion, an alkaline earth metal ion and an onium ion of an organic amine or ammonium ion; and a, b, c and d are 0 or 1, provided that the sum thereof is an integer of 2 to 4) or a salt thereof to reaction with a chlorinating reagent to convert a sulfonic acid group to a chlorosulfonyl group and subsequent reaction with an amidating reagent in the presence of an organic amine.
8. A phthalocyanine colorant obtained by subjecting 4-sulfophthalic acid derivatives themselves to reaction in the presence of a metallo compound, followed by subjecting thus obtained sulfometallophthalocyanine compound or a salt thereof to reaction with a chlorinating reagent to convert a sulfonic acid group to a chlorosulfonyl group and subsequent reaction with an amidating reagent and an organic amine.
9. An ink characterized by comprising the phthalocyanine colorant according to any one of the above 1 to 8, as a colorant component.
10. The ink according to the above 9, wherein an organic solvent is contained.
11. The ink according to the above 9 or 10, which is used for ink-jet recording.
12. An ink set characterized, in an ink-jet printer using not less than 2 kinds of cyan inks with different colorant density, by using, as at least one kind therefore, the ink according to any one of the above 9 or 11.
13. An ink-jet recording method characterized by using the ink according to any one of Claims 9 to 11 or the ink set according to the above 12, in an ink-jet recording method wherein the recording is carried out onto a recording material by discharging ink droplets in response to recording signals.
14. The ink-jet recording method according to the above 13
   wherein the recording material is an information transmission sheet.
15. Then ink-jet recording method according to the above 14
   wherein the information transmission sheet is a surface treated sheet having an ink image receiving layer containing white inorganic pigment particles on a carrier.
16. A container containing the ink or the ink set according to any one of the above 9 to 12.
17. An ink-jet printer having the container according to the above 16.
18. A colored product colored with the ink or the ink set according to any one of the above 9 to 12.
19. A method for production of a phthalocyanie colorant characterized by subjecting 4-sulfophthalic acid derivatives to reaction with themselves or subjecting a 4-sulfophthalic acid derivative to reaction with a phthalic acid (phthalic anhydride) derivative in the presence of a copper compound, followed by subjecting thus obtained compound or a salt thereof to reaction with a chlorinating reagent to convert a sulfonic acid group to a chlorosulfonyl group and subsequent reaction with an amidating reagent and an organic amine.
20. A phthalocyanine colorant wherein, in the phthalocyanine colorant represented by the following general Formula (9): 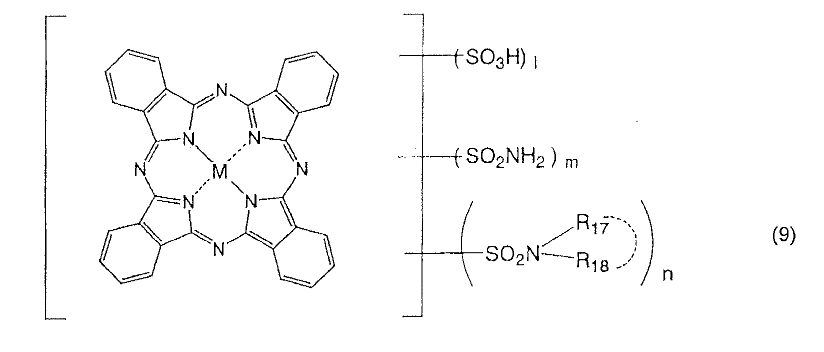 (wherein M represents a hydrogen atom, a metal atom, a metal oxide, a metal hydroxide or a metal halide; l includes 0 and smaller than 1; m is not smaller than 1 and not larger than 3.7 ; n is not smaller than 0.3 and not larger than 3; sum of l, m and n is not smaller than 2 and not larger than 4; R₁₇ and R₁₈ each independently represent a hydrogen atom, a substituted or unsubstituted alkyl group, a substituted or unsubstituted cycloalkyl group, a substituted or unsubstituted aralkyl group, a substituted or unsubstituted aryl group, a substituted or unsubstituted heterocyclic group, and a substituted or unsubstituted alkenyl group; R₁₇ and R₁₈ may form a ring by bonding together, provided that except when both R₁₇ and R₁₈ represent a hydrogen atom; and at least one of R₁₇ and R₁₈ has an ionic and hydrophilic group as a substituent.),
   a β-substituted compound is not less than 60% and an a-substituted compound is not more than 40%.
21. A mixture of colorants represented by the following general Formula (10): 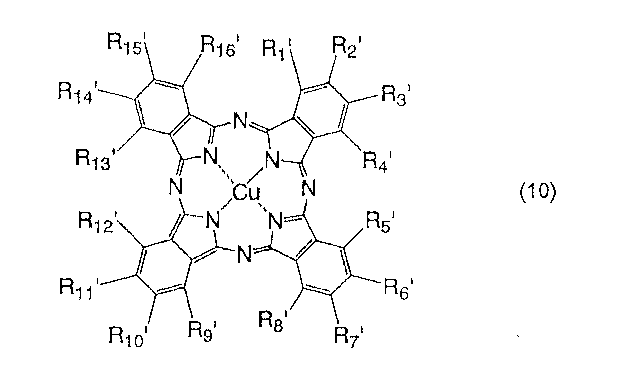 {wherein R₂', R₃', R₆', R₇', R₁₀', R₁₁', R₁₄' and R₁₅' each independently represent an unsubstituted sulfamoyl group (-SO₂NH₂), a sulfone group (-SO₃M') or a hydrogen atom, provided that at least one of R₂', R₃', R₆', R₇', R₁₀', R₁₁', R₁₄' and R₁₅' is an unsubstituted sulfamoyl group; R₁, R₄, R₅, R₈, R₉, R₁₂, R₁₃ and R₁₆ represent hydrogen atoms; and M' represents a proton, an alkaline metal ion, an alkaline earth metal ion and an onium ion of an organic amine or ammonium ion.}
22. A mixture of colorants obtained by subjecting 4-sulfophthalic acid derivatives to reaction with themselves, or with a phthalic acid (phthalic anhydride) derivative in the presence of a copper compound, followed by subjecting thus obtained compound or a salt thereof to reaction with a chlorinating reagent to convert a sulfonic acid group to a chlorosulfonyl group and subsequent reaction with an amidating reagent.

### Best Mode for Carrying out the Invention

The present invention will be described in detail hereinbelow. A colorant of the present invention represented by the above Formula (1) is obtained by subjecting 4-sulfophthalic acid derivatives to reaction themselves or subjecting a 4-sulfophthalic acid derivative to reaction with a phthalic acid (phthalic anhydride) derivative in the presence of a copper compound, followed by reaction of thus obtained compound with a chlorinating reagent to convert a sulfonic acid group to a chlorosulfonyl group, and further reaction with an amidating reagent, and thereby introduccing a sulfonic acid group and an sulfamoyl group at a specific substitution position (β-position) of a phthalocyanine ring. A printed material using said colorant shows very superior ozone gas fastness.

In general, a phthalocyanine derivative may contain substitution position isomers of substituents R₁ to R₁₆ in Formula (1) as shown below, that are formed inevitably in synthesizing thereof and these substitution position isomers are often regarded as the same derivatives without being distinguished each other: 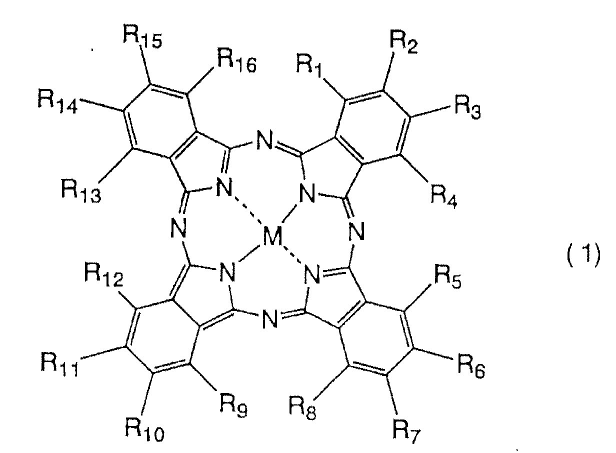 (In Formula (1), M and R₁ to R₁₆ represent each the same meaning as the above). For the sake of convenience in the present description, three kinds of phthalocyanine derivatives having a different substitution position are classified as defined below into (1) a substitution type at the β-position, (2) an substitution type at the α-position and (3) a mixed substitution type at α-and β-positions, which are used in explaining phthalocyanine derivatives having different substitution positions.

In the following explanation, the 1st to the 16th substitution positions represent the position on a benzene ring to which substituent of R₁ to R₁₆ is bonded, respectively, which should be similar hereinbelow in the present description.
(1) a substitution type at the β-position: a phthalocyanine colorant having a specific substituent at the 2nd and/or 3rd, 6th and/or 7th, 10th and/or 11th, and 14th and/or 15th positions.
(2) a substitution type at the a-position: a phthalocyanine colorant having a specific substituent at the 1st and/or 4th, 5th and/or 8th, 9th and/or 12th, and 13th and/or 16th positions.
(3) a mixed substitution type at the a-and β-positions: a phthalocyanine colorant having a specific substituent at an optional position among the 1st to 16th positions.

Whether the above phthalocyanine colorant is a substitution type at the β-position or a substitution type at the a-position substitution type or a mixed substitution type at the a-and β-positions can be identified by decomposing it to a phthalic acid derivative using nitric acid, and the like, and examining the substitution position using NMR.

That is, decomposition of a phthalocyanine colorant of a substitution type at the β-position provides a phthalic acid derivative substituted at 4^{th}-position, decomposition of a phthalocyanine colorant of a substitution type at the a-position provides a phthalic acid derivative substituted at 3^{rd}-position, and decomposition of a phthalocyanine colorant of a mixed substitution type at the a-and β-positions provides a phthalic acid derivative substituted at 3^{rd} and 4^{th}-positions, respectively.

In the above Formula (1), M represents a hydrogen atom, a metal atom, a metal oxide, a metal hydroxide or a metal halide. A metal atom includes specifically, for example, Li, Na, K, Mg, Ti, Zr, V, Nb, Ta, Cr, Mo, W, Mn, Fe, Co, Ni, Ru, Rh, Pd, Os, Ir, Pt, Cu, Ag, Au, Zn, Cd, Hg, Al, Ga, In, Si, Ge, Sn, Pb, Sb, and Bi. A metal oxide includes such as VO and GeO. A metal hydroxide includes, for example, Si(OH)₂, Cr(OH)₂, Sn (OH)₂ and AlOH. A metal halide includes, for example, SiCl₂, VCl, VCl₂, VOCl, Fecl, GaCl, ZrCl and AlCl. Among these, Cu, Ni, Zn, Al and AlOH are preferable and Cu is most preferable.

Unless otherwise stated in the present description, the number of carbon atoms is not limited especially in an alkyl group, an alkoxyl group, an alkenyl group and a cycloalkyl group, and the like, as long as the object of the present invention can be attained. The approximate number of carbon atoms in these groups is usually 1 to 16, preferably 1 to 12, more preferably 1 to 6 and still more preferably 1 to 4. However, it is usually 3 to 12, preferably about 5 to 8 as for a cycloalkyl group. The kind of a substituent, if contained in these groups, is not limited especially as long as the object of the present invention can be attained. A preferable substituent on the carbon chain of these groups includes, for example, a sulfonic acid group and a group derived therefrom (a sulfoneamide group, etc.), a carboxyl group and a group derived therefrom (a carboxylate ester group, etc.), a phosphono group and a group derived therefrom (a phosphate ester group, etc.), a hydroxyl group, a substituted or unsubstituted alkoxyl group, a substituted or unsubstituted amino group, a substituted or unsubstituted aryl group, a halogen atom and a cyano group.

The kind of an aryl group is not limited especially as long as the object of the present invention can be attained. A phenyl group or a naphthyl group is usually used. A preferable substituent on an aryl group includes, for example, a substituent mentioned as a preferable substituent on the above carbon chain, and a ureido group, a nitro group and a heterocyclic group.

In the above Formula (3), R₁₇ and R₁₈ represent each independently a hydrogen atom, a substituted or unsubstituted alkyl group, a substituted or unsubstituted cycloalkyl group, a substituted or unsubstituted aryl group, a substituted or unsubstituted heterocyclic group and a substituted or unsubstituted alkenyl group and R₁₇ and R₁₈ may form a ring by bonding together, provided that except when both R₁₇ and R₁₈ are a hydrogen atom. At least one of R₁₇ and R₁₈ has an ionic and hydrophilic group as a substituent. As the ionic and hydrophilic group, an anionic and hydrophilic group is preferable, including such as a sulfonic acid group, a carboxyl group and a phosphono group. These ionic and hydrophilic groups may be a free form or an alkali metal salt, an alkaline-earth metal salt, or an onium ion salt of an organic amine or an ammonium salt. The alkali metal includes, for example, sodium, potassium and lithium. The alkaline-earth metal includes, for example, calcium and magnesium. The organic amine includes, for example, an alkylamine such as a lower alkylamine of 1 to 4 carbon atoms including methylamine and ethylamine. An alkanolamine includes, for example, a mono-, di- or tri-(lower alkanolamine of 1 to 4 carbon atoms) such as monoethanolamine, diethanolamine, triethanolamine, monoisopropanolamine, diisopropanolamine and triisopropanolamine. The preferable salt includes a salt of ammonium, sodium, potassium, lithium, monoethanolamine, diethanolamine, triethanolamine, monoisopropanolamine, diisopropanolamine and triisopropanolamine.

The above substituted or unsubstituted alkyl group includes, for example, an alkyl group of 1 to 12 carbon atoms. The substituent includes, for example, a sulfonic acid group, a carboxyl group, a phosphono group, a hydroxyl group, an alkoxyl group, an amino group (which may be substituted with an alkyl group, an aryl group and an acetyl group), an aryl group, a halogen atom and a cyano group. Among these groups, a sulfonic acid group, a carboxyl group, a phosphono group and a hydroxyl group are preferable.

The above substituted or unsubstituted cycloalkyl group includes, for example, a cycloalkyl group of 3 to 12 carbon atoms, preferably a cycloalkyl group of 5 to 8 carbon atoms. A substituent on said cycloalkyl ring includes, for example, a sulfonic acid group, a carboxyl group, a phosphono group, a hydroxyl group, an alkoxyl group, an amino group (which may be substituted with an alkyl group, an aryl group and an acetyl group), an aryl group, a halogen atom and a cyano group. Among these groups, a sulfonic acid group, a carboxyl group, a phosphono group and a hydroxyl group are preferable.

Number of carbon atoms of an alkyl group in the above the alkyl group substituted with an aryl group (an aralkyl group) is preferably about 1 to 12. Said aralkyl group may have a substituent and example of said substituent includes, for example, a sulfonic acid group, a carboxyl group, a phosphono group, a hydroxyl group, an amino group (which may be substituted with an alkyl group, an aryl group and an acetyl group), a ureido group, an alkyl group, an alkoxyl group, a nitro group, a cyano group, a heterocyclic group and a halogen atom. Among these groups, a sulfonic acid group, a carboxyl group, a phosphono group and a hydroxyl group are preferable.

The above substituted or unsubstituted aryl group includes, for example, a phenyl group and a naphthyl group. The substituent includes, for example, a sulfonic acid group, a carboxyl group, a phosphono group, a hydroxyl group, an amino group (which may be substituted with an alkyl group, an aryl group and an acetyl group), a ureido group, an alkyl group, an alkoxyl group, a nitro group, a cyano group, a heterocyclic group and a halogen atom. Among these groups, a sulfonic acid group, a carboxyl group, a phosphono group and a hydroxyl group are preferable.

The above substituted or unsubstituted heterocyclic group is preferably a five-membered or six-membered ring, which may further be a fused ring and may be an aromatic heterocycle or a nonaromatic heterocycle. The heterocycle includes, for example, pyridine, pyrazine, pyrimidine, pyridazine, triazine, quinoline, isoquinoline, quinazoline, cinnoline, phthalazine, quinoxaline, pyrrol, indole, furan, benzofuran, thiophene, benzothiophene, pyrazole, imidazole, benzimidazole, triazole, oxazole, benzoxazole, thiazole, benzothiazole, isothiazole, benzisothiazole, pyrrolidine, piperidine, piperazine, imidazolidine and thiazoline. These heterocycles may have a substituent, which includes, for example, a sulfonic acid group, a carboxyl group, a phosphono group, a hydroxyl group, an amino group (which may be substituted with an alkyl group, an aryl group and an acetyl group), a ureido group, an alkyl group, an alkoxyl group, a nitro group, a cyano group and a halogen atom.

The above substituted or unsubstituted alkenyl group includes, for example, an alkenyl group of 1 to 12 carbon atoms. The substituent includes, for example, a sulfonic acid group, a carboxyl group, a phosphono group, a hydroxyl group, an alkoxyl group, an amino group (which may be substituted with an alkyl group, an aryl group and an acetyl group), an aryl group, a halogen atom and a cyano group. Among these groups, a sulfonic acid group, a carboxyl group, a phosphono group and a hydroxyl group are preferable.

In Formula (1), R₂, R₃, R₆, R₇, R₁₀, R₁₁, R₁₄ and R₁₅ each independently represent an unsubstituted sulfamoyl group represented by Formula (2), a substituted sulfamoyl group represented by Formula (3), or a hydrogen atom, provided that at least one of R₂, R₃, R₆, R₇, R₁₀, R₁₁, R₁₄ and R₁₅ is the unsubstituted sulfamoyl group, and at least one thereof is the substituted sulfamoyl group; and R₁, R₄, R₅, R₈, R₉, R₁₂, R₁₃ and R₁₆ represent hydrogen atoms; the sum of a number of an unsubstituted sulfamoyl group and a number of a substituted sulfamoyl group is 2 to 4, and a number of an unsubstituted sulfamoyl group is 1 to 3 and a number of a substituted sulfamoyl group is 1 to 3.

In each of combinations of R₂ and R₃, R₆ and R₇, R₁₀ and R₁₁, and R₁₄ and R₁₅, preferably one member of each combination is a hydrogen atom, and the other is an unsubstituted sulfamoyl group (-SO₂NH₂)or a substituted sulfamoyl group represented by Formula (3), and among R₂, R₃, R₆, R₇, R₁₀, R₁₁, R₁₄ and R₁₅, at least one is an unsubstituted sulfamoyl group and at least one is a substituted sulfamoyl group represented by the above Formula (3).

Specific combination examples of a metal (M) and a compound represented by the above Formula (3) in the phthalocyanine compounds represented by the above Formula (1) of the present invention are shown in Tables 1 to 5, but the phthalocyanine compounds used in the present invention are not limited to the following examples. In the Tables, a compound represented by the above Formula (3) is shown in a free acid form.

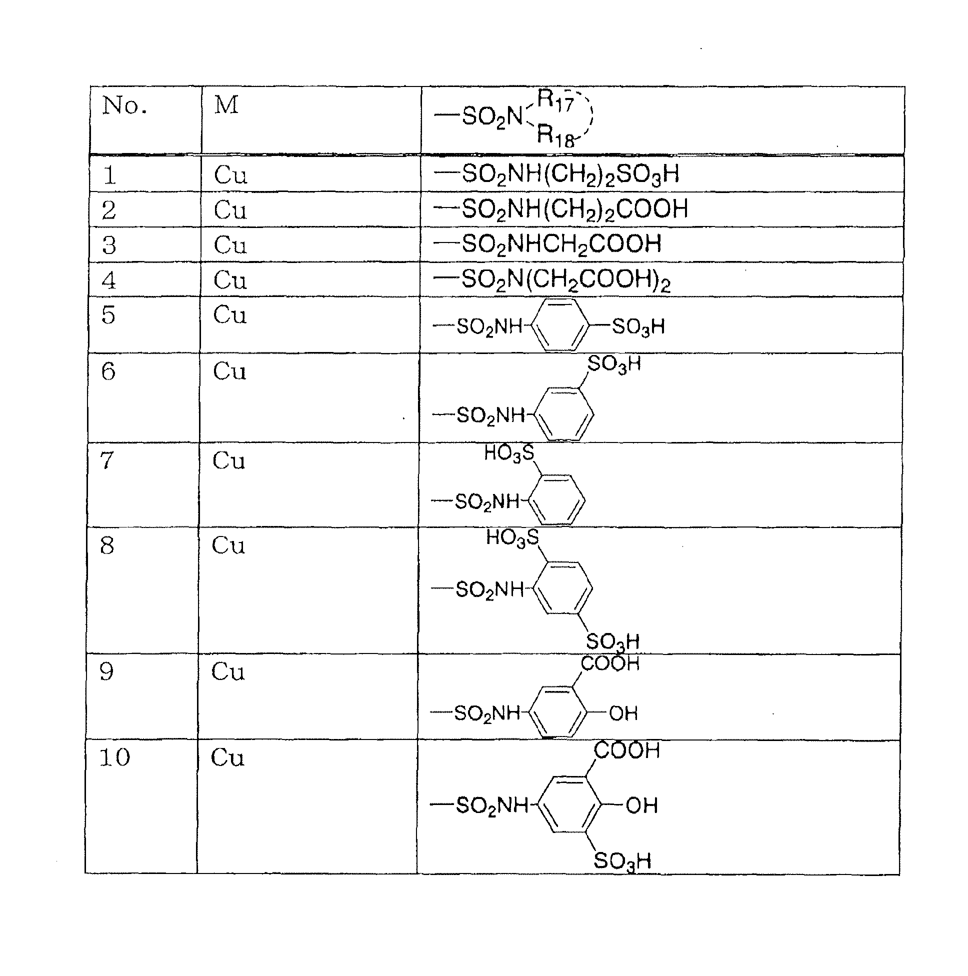

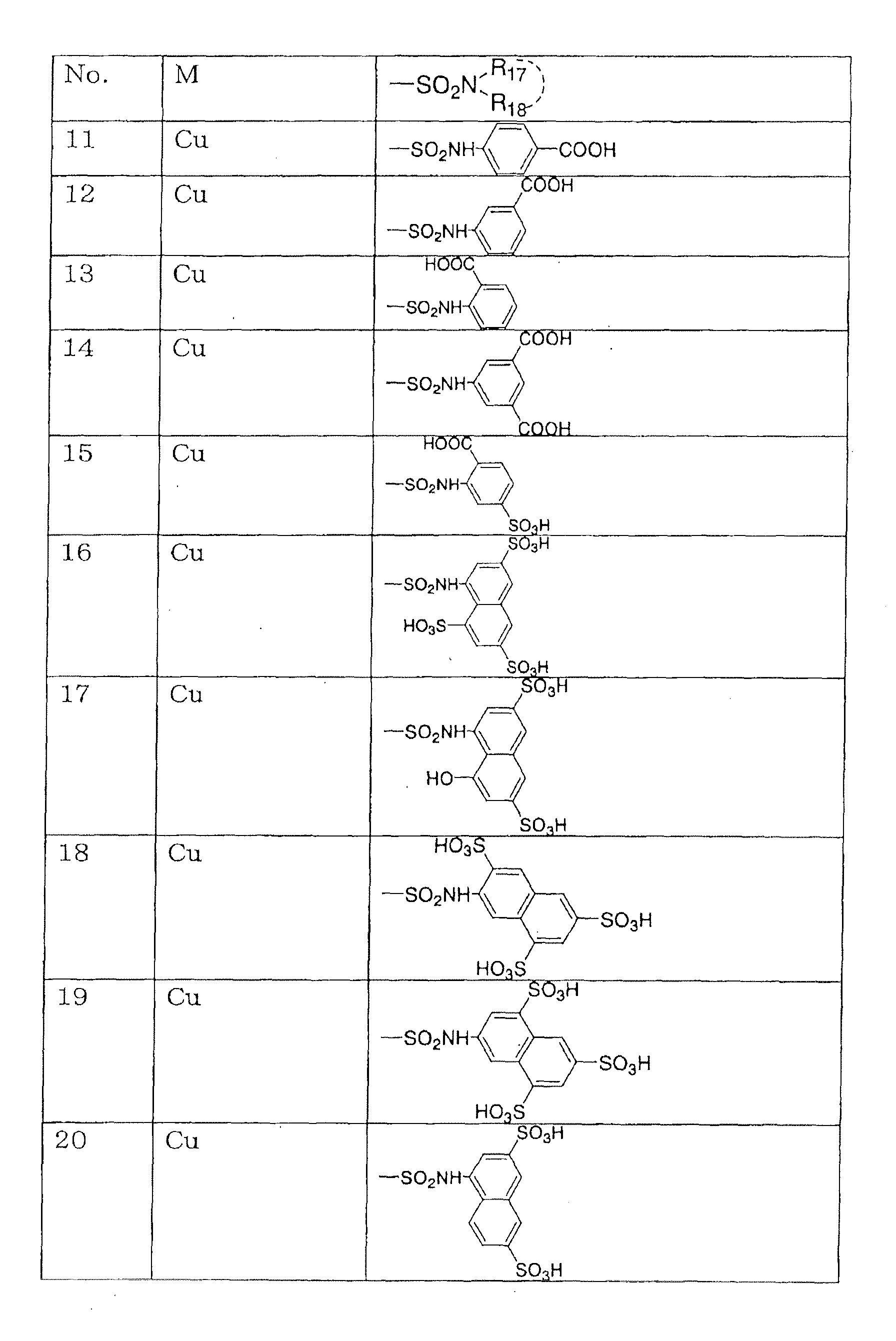

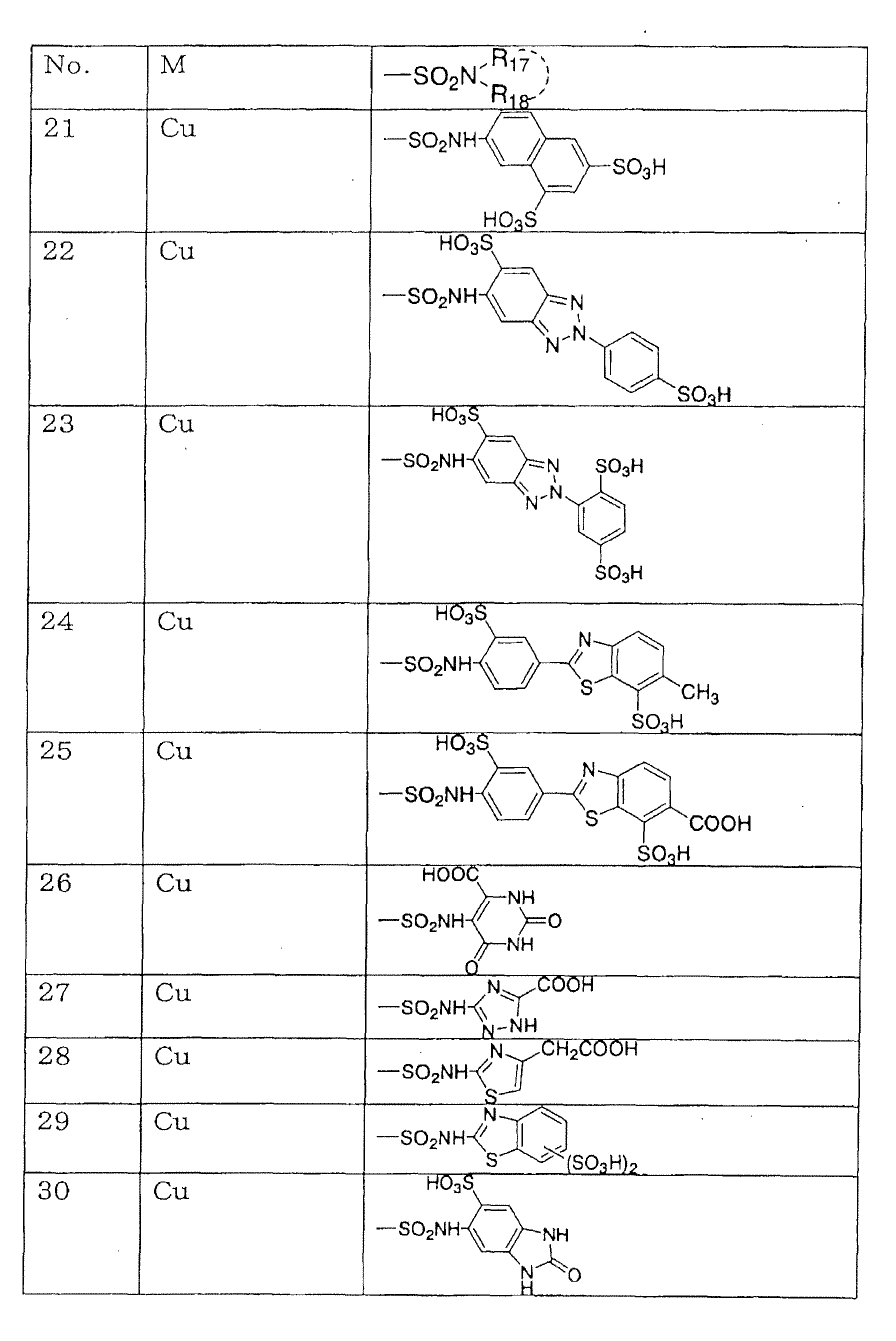

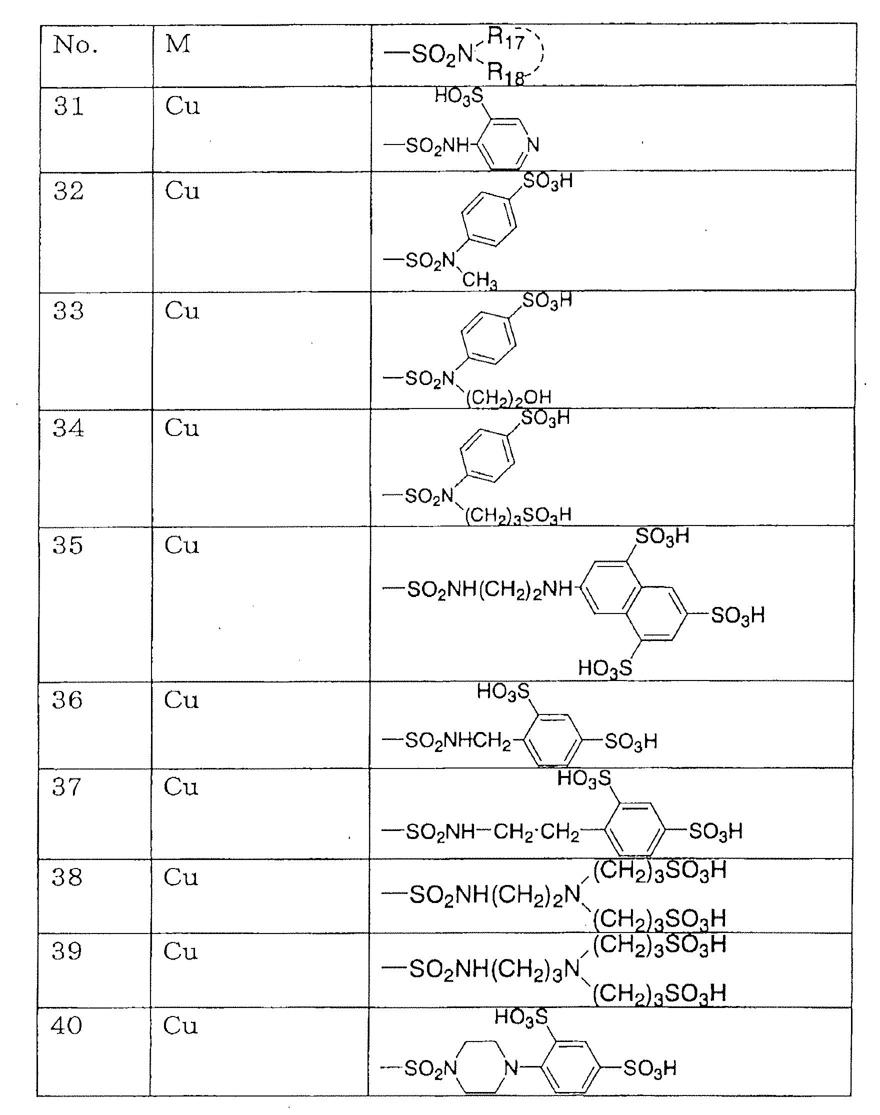

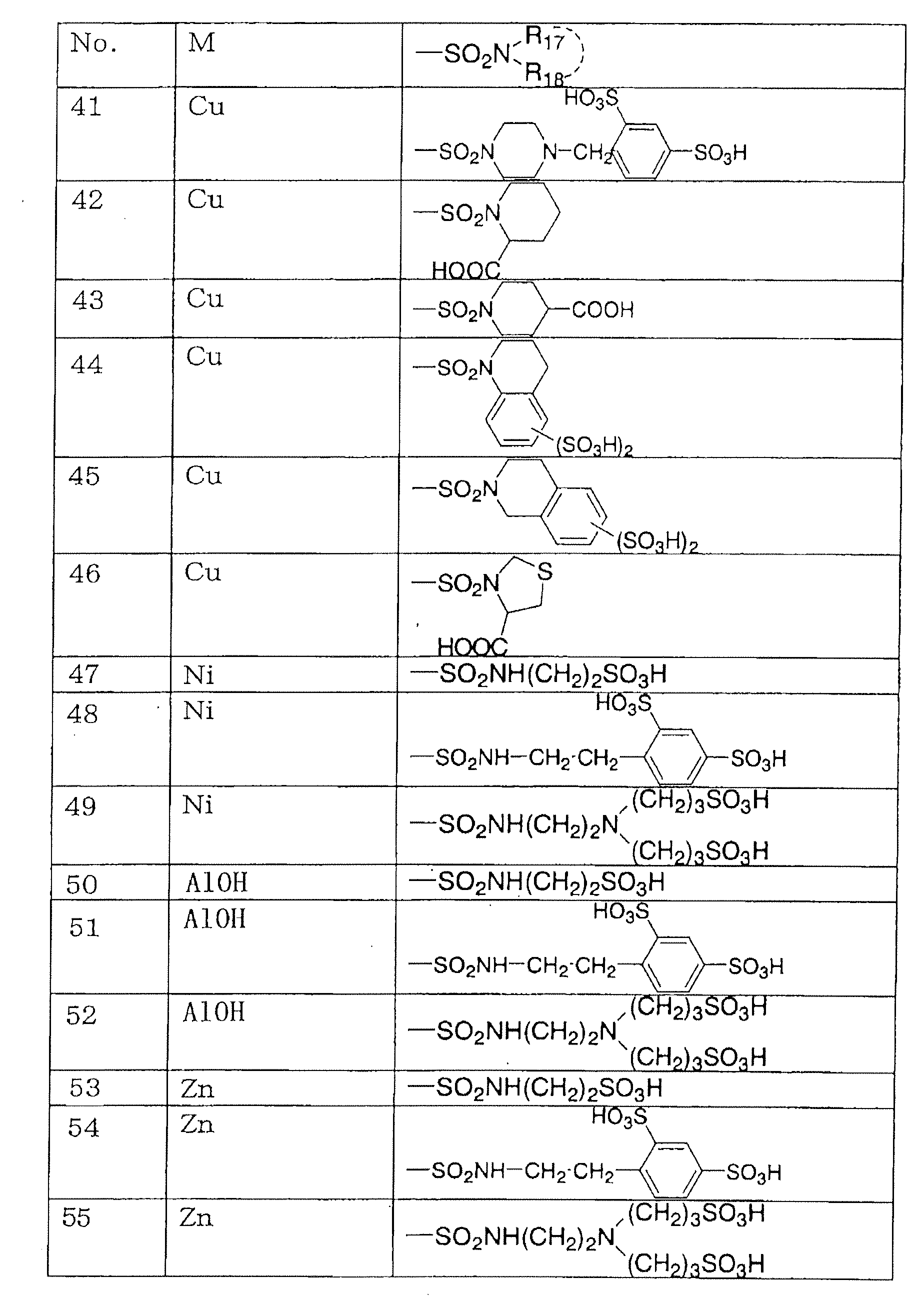

A phthalocyanine colorant of the present invention is obtained by subjecting 4-sulfophthalic acid derivatives to reaction with themselves or subjecting a 4-sulfophthalic acid derivative to reaction with a phthalic acid (phthalic anhydride) derivative in the presence of a metallo compound to obtain a compound (sulfophthalocyanine of a β-position substitution type), followed by reaction of this product with a chlorinating reagent to convert a sulfonic acid group to a chlorosulfonyl group and further reaction with an amidating reagent and an organic amine. 4-Sulfophthalic acid derivative used as a raw material usually contains, as impurities, about 15 to 25% by weight of compounds sulfonated in the 3-position and thus compounds substituted at the α-position, derived from such compounds, are mixed in an objective phthalocyanine colorant. To further enhance effects of the present invention (particularly to obtain an ink with higher ozone fastness), it is preferable to use a raw material containing less impurities sulfonated at the 3-position.

Also in an objective phthalocyanine colorant, compounds formed by decomposition of a part of chlorosulfonyl groups during the reaction are mixed in the reaction product, however, they are not particularly an obstacle. Thus obtained colorant is represented by Formula (9) as shown below and will contain a derivative substituted at the β-position, as a main component, of at least not less than 60%, preferably not less than 70% and more preferably not less than 75%: 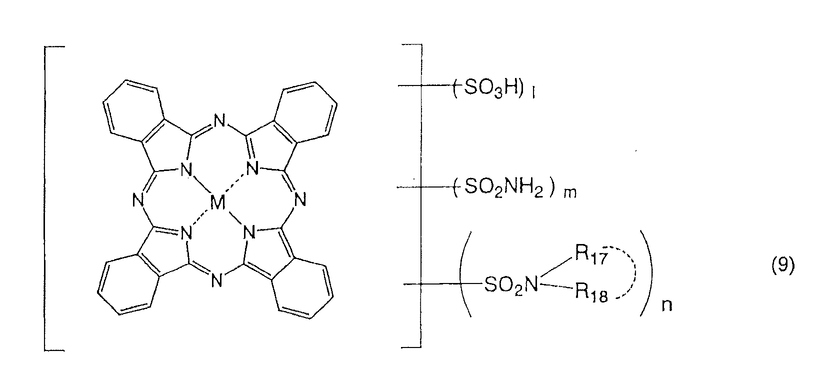 (In Formula (9), M, R₁₇ and R₁₈ represent each the same meaning as defined above; 1 includes 0 and is less than 1, preferably not more than 0.7, more preferably not more than 0.5 and most preferably not more than 0.3; n is not less than 0.3 and preferably not less than 0.7 and not more than 3; m is not less than 1 and not more than 3.7; and the total of 1, m and n is not less than 2 and not more than 4; and the values of 1, m and n show each an average value in a mixture.)

In producing a phthalocyanine colorant of the present invention, it is preferable to adopt ratio (mole ratio) of an amidating reagent to an organic amine corresponding to a substituted sulfamoyl group represented by Formula (3) such that ratio of an unsubstituted sulfamoyl group to a substituted sulfamoyl group in said phthalocyanine colorant falls in the range of 1:3 to 3:1. High ratio of an unsubstituted sulfamoyl group (high reaction ratio of an amidating reagent) gives high ozone fastness of a recorded image by an ink containing thus obtained phthalocyanine colorant, while the colorant tends to have low water-solubility and cause bronze phenomenon. In contrast, high ratio of an organic amine gives high water-solubility of thus obtained phthalocyanine colorant, causing little bronze phenomenon, while low ozone fastness of an image. Therefore, in response to the kind of an organic amine to be used, ratio of the amidating reagent and the organic amine can be adjusted, as appropriate, to obtain good balance.

A method for producing a compound of the present invention represented by Formula (1) will be described.

At first, a metallo phthalocyanine sulfonic acid represented by the above Formula (5) is synthesized. As described above, a compound substituted at the a-position, derived from raw materials is formed as a byproduct in the production of a phthalocyanine colorant of the present invention, but the production method is described here in reference to a compound substituted at the β-position, that is, a main component.

A metallo phthalocyanine sulfonic acid represented by Formula (5) can be synthesized, for example, by subjecting 4-sulfophthalic acid derivatives to reacting with themselves or subjecting a 4-sulfophthalic acid derivative to reaction with a phthalic acid (phthalic anhydride) derivative in the presence of, for example, a catalyst and a metallo compound.

By changing reaction mol ratio of a 4-sulfophthalic acid derivative to a phthalic acid (phthalic anhydride) derivative, the number of sulfone groups, that is, values of a to d can be adjusted. The 4-sulfophthalic acid derivative includes 4-sulfophthalic acid, 4-sulfophthalic anhydride, 4-sulfophthalimide, 4-sulfophthalonitrile, 4- or 5-sulfo-2-cyanobenzamide, 5-sulfo-1,3-diiminoisoindolin or salts thereof. Among these compounds, 4-sulfophthalic acid or a salt thereof is usually preferable. When phthalic acid, phthalic anhydride and phthalimide are used, the addition of urea is essential. Use amount of the urea is 5 to 100 times mol based on 1 mol of a 4-sulfophthalic acid derivative. 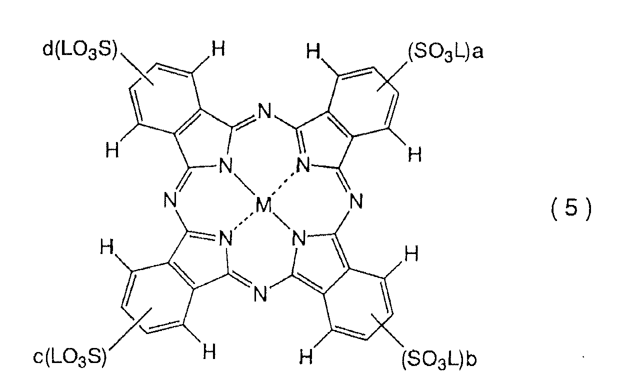 {In Formula (5), M, L, a, b, c and d represent each the same meaning as above.}

The reaction is usually carried out in the presence of a solvent. An organic solvent with boiling point not lower than 100ºC, preferably not lower than 130ºC is used as the solvent, which includes, for example, n-amyl alcohol, n-hexanol, cyclohexanol, 2-methyl-1-pentanol, 1-heptanol, 1-octanol, 2-ethylhexanol, benzyl alcohol, ethylene glycol, propylene glycol, trichlorobenzene, chloronaphthalene, nitrobenzene, quinoline, sulfolane and urea. Use amount of the solvent is 1 to 100 times by mass of that of a 4- sulfophthalic acid derivative.

The catalyst includes 1,8-diazabicyclo[5,4,0]-7-undecene, ammonium molybdate and boric acid. Amount of the addition is 0.001 to 1 mol based on 1 mol of a 4-sulfophthalic acid derivative.

The metallo compound includes a halide, a carboxylate, a sulfate, a nitrate, an acetylacetonate, a carbonyl compound, a complex, and the like of such as Li, Na, K, Mg, Ti, Zr, V, Nb, Ta, Cr, Mo, W, Mn, Fe, Co, Ni, Ru, Rh, Pd, Os, Ir, Pt, Cu, Ag, Au, Zn, Cd, Hg, Al, Ga, In, Si, Ge, Sn, Pb, Sb and Bi. For example, copper chloride, copper bromide, nickel chloride, nickel acetate, cobalt chloride, cobalt acetate and cobalt acetylacetonate are included. Use amount of the metallo compound is 0.15 to 0.35 times mol based on 1 total mol of 4-sulfophthalic acid derivatives or 1 total mole of a 4-sulfophthalic acid derivative and an (unsubstituted) phthalic acid derivative.

Reaction temperature is usually 100 to 290ºC and preferably 130 to 270ºC. Reaction time depends on reaction temperature, but is usually 1 to 8 hours. Metallo Phthalocyanine tetrasulfonic acid or a salt form thereof is obtained by filtration, salting out (or acid depositing) and drying after completion of the reaction. When a free acid is desired, for example, the reaction product is deposited using an acid. When a salt is desired, the reaction product is salted out, but when a desired salt is not obtained by salting out, for example, an ordinary method for salt exchanging, where a free acid is added with a desired organic or inorganic base can be used.

Copper phthalocyanine sulfonic acid or a salt thereof in the above Formula (6), where M is copper, is synthesized by a method described in Patent Literature 8. Copper phthalocyanine tetrasulfonic acid in the above Formula (6), where a, b, c and d are each 1, is obtained by reacting 4-sulfophthalic acid (1 mol), copper chloride (II) (0.3 mol), ammonium phosphomolybdate (0.003 mol), urea (6 mol) and ammonium chloride (0.5 mol) at 180ºC for 6 hours in a sulfolane solvent. However, as reactivity depends on the kinds and use amount of a 4-sulfophthalic acid derivative, a metallo compound, a solvent, a catalyst, and the like, these reaction conditions are not limited to the above.

By subjecting phthalocyanine sulfonic acid or a salt thereof represented by Formula (5) to reaction with a chlorinating reagent in a solvent such as an organic solvent, sulfuric acid, fuming sulfuric acid or chlorosulfonic acid, metallophthalocyanine sulfonic chloride represented by Formula (7) is obtained. The chlorinating reagent is preferably used in excess to a sulfonic acid group of phthalocyanine sulfonic acid or a salt thereof, and is about 1 to 10 times, preferably not less than 1.5 times, as mole ratio to the sulfonic acid group. The organic solvent to be used in the reaction includes, but is not limited to, such as benzene, toluene, nitrobenzene, chlorobenzene, N,N-dimethylformamide and N,N-dimethylacetoamide. The chlorinating reagent includes, but is not limited to, such as chlorosulfonic acid, thionyl chloride, sulfuryl chloride, phosphorus trichloride, phosphorus pentachloride and phosphorus oxychloride. With regard to a phthalocyanine colorant of the present invention, impurities may be formed by chlorination of a phthalocyanine nucleus and mixed in the reaction product. 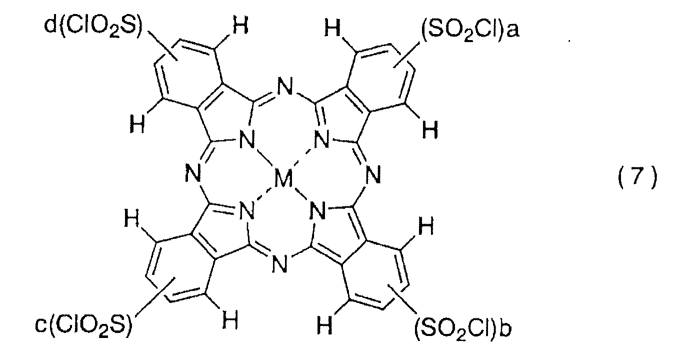 (wherein M, a, b, c and d represent each the same meaning as above.)

Thus obtained phthalocyanine tetrasulfonic chloride is then reacted with a corresponding organic amine and an amidating reagent in water solvent usually at pH 6 to 10, usually at 5 to 70ºC and usually for 1 to 20 hours to obtain an objective compound. The total use amount (mole ratio) of the amidating reagent and the above organic amine is preferably not less than the equimolar ratio to the sulfonic chloride group of the above phthalocyanine sulfonic chloride, usually 1 to 20 times by mole and preferably 1.5 to 5 times by mole. The use ratio of the above organic amine may be decided according to the ratio of substituted sulfamoyl groups of the objective compound.

An amidating reagent to be used in the reaction includes, but is not limited to, for example, an ammonium salt such as ammonium chloride and ammonium sulfate; urea, ammonia water and ammonia gas.

Use amount of the organic amine is usually not less than one mole time of the theoretical value based on 1 mol of a phthalcyanine compound. The amount depends on reactivity of the organic amine and reaction conditions and is not limited to the above amount.

With regard to a phthalocyanine colorant of the present invention, a dimer (for example, Pc-L-Pc) or a trimer of a phthalocyanine ring (Pc) linked through a divalent bonding group (L) may be partially formed and mixed in the reaction product as impurities, wherein (L) present in multiple may be same or different.

The divalent bonding group represented by L includes a sulfonyl group (-SO₂-) and -SO₂-NH-SO₂- and the like. The bonding group may also be a group formed by combining these groups.

Thus obtained phthalocyanine colorant of the present invention can be separated by filtration, and the like, after precipitating with acid or salting out. Salting out is preferably carried out in, for example, acidic to alkaline conditions, preferably in a range of pH 1 to 11. Temperature in salting out is not limited especially, however, salting out is preferably carried out by adding sodium chloride, and the like after heating usually at 40 to 80ºC, preferably 50 to 70ºC.

A phthalocyanine colorant of the present invention that is synthesized by the above method and represented by the above Formula (1) is obtained in a form of a free acid or a salt thereof. When a free acid is desired, the reaction product is precipitated using an acid. When a salt is desired, the reaction product is salted out, but when a desired salt is not obtained by salting out, for example, an ordinary method for salt exchanging, where a desired organic or inorganic base is added to a free acid of a compound, can be used.

A cyan ink of the present invention contains a phthalocyanine colorant of the above Formula (1) produced by the above method and is prepared using water as a medium, and when the ink is used as an ink for ink-jet recording, the phthalocyanine colorant with lower content of an anion such as Cl⁻ and SO₄²⁻ is preferable, and general standard of the total content of Cl⁻ and SO₄²⁻ is not higher than 5% by weight, preferably not higher than 3% by weight and more preferably not higher than 1% by weight in the phthalocyanine colorant, while not higher than 1% by weight in the ink. To produce a phthalocyanine colorant of the present invention having lower Cl⁻ and SO₄²⁻, a method for desalting can be applied using, for example, an ordinary method using a reverse osmosis membrane or a method for subjecting a dried solid or a wet cake of a phthalocyanine colorant of the present invention to stirring in a mixed solvent of an alcohol and water, filtering and drying. An alcohol to be used is a lower alcohol of 1 to 4 carbon atoms, preferably 1 to 3 carbon atoms and more preferably methanol, ethanol or 2-propanol. In desalting using an alcohol, a method for desalting by heating the alcohol to near boiling point thereof and then cooling can also be adopted. The content of Cl⁻ and SO₄⁻ is measured by, for example, an ion chromatography.

In using a cyan ink of the present invention as an ink for ink-jet recording, it is preferable to use a phthalocyanine colorant having a lower content of a heavy metal (ion) such as zinc and iron and a metal (cation) such as calcium and silica {except a metal (M in Formula (1)) contained in phthalocyanine skeleton}. A general standard content in a purified and dried phthalocyanine colorant is, for example, not higher than about 500 ppm for each heavy metal (ion) such as zinc and iron and a metal (cation) such as calcium and silica. The content of a heavy metal (ion) and a metal (cation) is measured by an ion chromatography, an atomic absorption analysis or an ICP (Inductively Coupled Plasma) emission analysis.

An ink of the present invention contains 0.1 to 8% by mass, preferably 0.3 to 6% by mass of a phthalocyanine colorant of the above Formula (1). An ink of a lower concentration type contains 0.1 to 2.5% by weight of a phthalocyanine compound of the present invention.

An ink of the present invention is prepared using water as a medium. An ink of the present invention contains 0.3 to 6% by mass of a mixture of a compound of the above Formula (1) obtained as above and has the above conditions or a salt thereof. An ink of the present invention further contains a water-soluble organic solvent, as needed, within the content range not impairing the effect of the present invention. A water-soluble organic solvent is used as a dye-dissolving agent, an agent for prohibiting dryness (a wetting agent), a viscosity modifier, a penetration promoter, a surface tension modifier, an antifoaming agent, and the like. Other ink modifiers include known additives such as an antiseptics-and- fungicide, a pH controller, a chelate agent, a rust prventive, an ultraviolet absorber, a viscosity modifier, a dye-dissolving agent, a fading inhibitor, an emulsion stabilizer, a surface tension modifier, an antifoaming agent, a dispersing agent and a dispersion stabilizer. Content of a water-soluble organic solvent is 0 to 60% by mass, preferably 10 to 50% by mass based on the total amount of an ink and an ink modifier is preferably used in 0 to 20% by mass, preferably 0 to 15% by mass based on the total amount of an ink. The remainder other than the above is water.

A water-soluble organic solvent that can be used in the present invention includes, for example, C₁₋₄ alkanols such as methanol, ethanol, n-propanol, isopropanol, n-butanol, isobutanol, sec-butanol and tert-butanol; carboxamides such as N,N-dimethyl formamide and N,N-dimethyl acetamide; heterocyclic ketones such as 2-pyrrolidone, N-methyl-2-pyrrolidone, 1,3-dimethy-imidazolidin-2-one and 1,3-dimethylhexahydropyrimid-2-one; ketones or keto-alocohols such as acetone, methyl ethyl ketone and 2-methyl-2-hydroxypentane-4-one; cyclic ethers such as tetrahydrofuran and dioxane; monomers or oligomers or polyalkylene glycols or thioglycols having (C₂₋₆) alkylene unit such as ethylene glycol, 1,2- or 1,3-propylene glycol, 1,2- or 1,4-butylene glycol, 1,6-hexylene glycol, diethylene glycol, triethylene glycol, tetraethylene glycol, dipropylene glycol, thiodiglycol, polyethylene glycol and polypropylene glycol; polyol(triol) such as glycerine and hexane-1,2,6-triol; (C₁₋₄) alkyl ethers of polyhydric alcohols such as ethylene glycol monomethyl ether, ethylene glycol monoethyl ether, diethylene glycol monomethyl ether, diethylene glycol monoethyl ether, triethylene glycol monomethyl ether and triethylene glycol monoethyl ether; γ-butyrolactone and dimethylsulfoxide.

In an ink according to the present invention, a preferable water-soluble organic solvent includes a mono- or polyhydric alcohol having carbon atoms of 3 to 8, and 2-pyrrolidone which may have a substituent of an alkyl group having carbon atoms of 1 to 3, and the like, and as a polyhydric alcohol, one having 2 to 3 hydroxyl groups is preferable. Typically, isopropanol, glycerine, mono, di- or triethylene glycol, dipropylene glycol, 2- pyrrolidone and N-methyl-2-pyrrolidone, butanol, and the like are included and isopropanol, glycerine, diethylene glycol and 2-pyrrolidone are more preferable. These water-soluble organic solvents are used alone or in combination.

An antiseptics and fungicide include organosulfur type, organonitrogen sulfur type, organohalogen type, haloarylsulfone type, iodopropargyl type, N-haloalkylthio type, benzothiazole type, nitrile type, pyridine type, 8-hydroxyquinoline, isothiazoline type, dithiol type, pyridine oxide type, nitropropane type, organotin type, phenol type, quaternary ammonium salt type, triazine type, thiadiazine type, anilide type, adamantane type, dithiocarbamate type, brominated indanone type, benzylbromacetate type, inorganic salts, etc. An organohalo type compounds include, for example, sodium pentachlorophenolate, and pyridine oxide type compounds include, for example, 2-pyridinethiol-1-oxide sodium salt, and inorganic salt type compounds include, for example, anhydrous sodium acetate, and isothiazoline type compounds include, for example, 1,2-benzisothiazoline-3-one, 2-n-octyl-4-isothiazoline-3-one, 5-chloro-2-methyl-4-isothiazoline-3-one, 5-chloro-2-methyl-4-isothiazoline-3-one magnesium chloride, 5-chloro-2-methyl-4-isothiazoline-3-one calcium chloride and 2-methyl-4-isothiazoline-3-one calcium chloride, and the like. Other antiseptics and fungicide includes sodium sorbate, sodium benzoate, and the like (for example, Proxcel GXL(S) (trade name)) and Proxcel XL-2(S)(trade name), and the like manufactured by Abesia Co., Ltd.).

As for a pH adjustor, any substance can be used as far as it can control pH of an ink within the range of 6.0 to 11.0 to improve storage stability of an ink. For example, alkanolamines such as diethanolamine and triethanolamine; alkali metal hydroxides such as lithium hydroxide, sodium hydroxide and potassium hydroxide; ammonium hydroxide; and alkali metal carbonates such as lithium carbonate, sodium carbonate and potassium carbonate are included.

Chelate agents include, for example, sodium ethylendiaminetetraacetate, sodium nitrilotriacetate, hydroxyethyl sodium ethylenediamine triacetate, sodium diethylenetriamine pentaacetate, uramil sodium diacetate, etc. Rust preventives include, for example, acidic sulfite, sodium thiosulfate, ammonium thioglycolate, diisopropylammonium nitrite, pentaerithritol tetranitrate, dicyclohexylammonium nitrite, etc.

An ultraviolet absorber, for example, a benzophenone type compound, a benzotriazole type compound, a cinnamic acid type compound, a triazine type compound, a stilbene type compound, or a compound which emits fluorescence by absorbing ultraviolet rays, represented by a benzoxazole type compound, a so-called fluorescent brightening agent can also be used.

As a viscosity modifier, a water soluble polymer compound is exemplified, for example, polyvinyl alcohol, cellulose derivatives, polyamine, polyimine, and the like, besides a water soluble organic solvent.

A dye solubilizer includes, for example, urea, e-caprolactam, ethylene carbonate, and the like.

A fading inhibitor is used to improve image storage ability. As the fading inhibitor, various kinds of an organic-series or a metal complex- series fading inhibitor can be used. Organic fading inhibitors include, for example, hydroquinones, alkoxyphenols, dialkoxyphenols, phenols, anilines, amines, indanes, chromans, alkoxyanilines and heterocycles. Metal complexes include nickel complex, zinc complex, etc.

A surface tension modifier includes surfactants such as anionic surfactants, amphoteric surfactants, cationic surfactants and nonionic surfactants. Anionic surfactants include salts such as alkylsulfocarboxylate, a-olefinsulfonate, polyoxyethylene-alkylether acetate, N-acylamino acids and salts thereof, N-acylmethyltaurine salts, alkylsulfate polyoxyalkylethersulfate, alkylsulfate polyoxyethylenealkyletherphosphate, rosin acid soap, castor oil sulfate, lauryl alcohol sulfate, alkylphenol phosphate, alkyl phosphate, alkylaryl sulfonate, diethyl sulfosuccinate, diethylhexyl sulfosuccinate, dioctyl sulfosuccinate; cationic surfactants include 2-vinylpyridine derivatives and poly(4-vinylpyridine) derivatives. Amphoteric surfactants include lauryldimethylaminoacetic acid betaine, 2-alkyl-N-carboxymethyl-N-hydroxyethylimidazolium betaine, palm oil fatty acid amide propyl dimethylamino acetic acid betaine, polyoctylpolyaminoethyl glycine and other imidazolidine derivatives. Nonionic surfactants include ethers such as polyoxyethylene nonylphenyl ether, polyoxyethylene octylphenyl ether, polyoxyethylene dodecylphenyl ether, polyoxyethylene oleyl ether, polyoxyethylene lauryl ether, polyoxyethylene alkyl ethers and polyoxy aryl alkyl ether; polyoxyethylene oleic acid; esters such as polyoxyethylene oleate, polyoxyethylene distearate, sorbitan laurate, sorbitan monostearate, sorbitan monooleate, sorbitan sesquioleate, polyoxyethylene monooleate and polyoxyethylene stearate; acetylene glycols such as 2,4,7,9-tetramethyl-5-decyn-4,7-diol, 3,6-dimethyl-4-octyn-3,6-diol and 3,5-dimethyl-1-hexyn-3-ol (for example, Surfinol-104, -104PG50, -82, -465, Olfin-STG, manufactured by Nisshin Chem. Co., Ltd.). These ink modifiers are used alone or in combination. In this connection, surface tension of an ink according to the present invention is usually 25 to 70 mN/m, more preferably 25 to 60 mN/m. And viscosity of an ink according to the present invention is preferably not higher than 30 mPa·s. Further, it is more preferable to adjust it to not higher than 20 mPa·s.

As an antifoaming agent, a fluorine-based or a silicone-based compound is used, if necessary.

On producing an ink according to the present invention, order of dissolving each agent is not limited in particular. In preparation of an ink, water used is preferably such one as contains low impurities, such as ion-exchanged water or distilled water. Further, foreign matters may be removed by micro-filtration with a membrane filter, and the like, if necessary, and in case of using it as an ink for an ink-jet printer, conducting micro-filtration is preferable. A pore diameter in micro-filtration is usually 1 micrometer to 0.1 micrometer, preferably 0.8 micrometer to 0.2 micrometer.

An ink according to the present invention can be used not only for monochrome image formation, but also for full-colored image formation. For full-colored image formation, it is also used as an ink set together with a magenta ink, yellow ink, and black ink. Further, to form an image with high resolution, it is also used as an ink set together with a light magenta ink, blue ink, green ink, orange ink, dark yellow ink, grey ink, and the like.

As a colorant applicable to a yellow ink, various types can be used. For example, it includes aryl or heterylazo dyes having phenols, naphthols, anilines, heterocyclics such as pyrazolone and pyridone, and open chain type active methylene compounds as a coupling component (hereinafter called as a coupler component); azomethine dyes having open chain type active methylene compounds as a coupler component; methine dyes such as benzylidene dyes, monomethine oxonol dyes, and the like; quinone type dyes such as naphthoquinone dyes, anthraquinone dyes, and the like; and as other types of dyes, quinophthalone dyes, nitro-nitroso dyes, acridine dyes, acridinon dyes, and the like.

As a colorant applicable to a magenta ink, various types can be used. For example, it includes arylazo dyes having phenols, naphthols, anilines as a coupler component; azomethine dyes having pyrazolones and pyrazolotriazoles as a coupler component; methine dyes such as arylidene dyes, styryl dyes, merocyanine dyes, cyanine dyes, oxonol dyes, and the like; carbonium dyes such as diphenylmethane dyes, triphenylmethane dyes, and xanthene dyes; quinone dyes such as naphthoquinone dyes, anthraquinone dyes, and anthrapyridone dyes; and fused polycyclic dyes such as dioxazine dyes; and the like.

Each colorant described above may exhibit each color of yellow, magenta and cyan for the first time after a part of chromophores is dissociated, and in that case, a counter cation may be an inorganic cation of such as an alkali metal or ammonium, or an organic cation such as pyridinium and a tertiary ammonium salt, and further a polymer cation which has these as partial structure thereof. As a black colorant applicable, a dispersion of carbon black can be exemplified besides disazo, trisazo and tetraazo dyes.

An ink according to the present invention can be used in a recording method such as in printing, duplication, marking, writing, drafting, stamping, and the like, and particularly is suitable for use in ink-jet printing.

An ink-jet recording method according to the present invention affords energy to an ink prepared as described above, and form an image on known image receiving materials, namely a plain paper, a resin-coated paper, a professional paper for an ink-jet, a glossy paper, a glossy film, a paper commonly used for electronic photography, a fiber or a cloth (cellulose, nylon, wool, and the like), glass, metal, pottery, leather, and the like.

On forming an image, to furnish gloss or water fastness, or to improve weather fastness, dispersion of polymer particulates (also said as polymer latex) may be used together. As for a period during which polymer latex is furnished to a recording material, it may be before, after, or at the same time of providing a colorant, and accordingly also a place of the addition thereof may be in a recording material, or in an ink, or it may be used as a liquid material of a polymer latex alone.

Hereinafter is explained, a recording material (especially, a recording paper and a recording film) used for ink-jet printing using an ink according to the present invention. A backing material in a recording paper and a recording film consists of a chemical pulp such as LBKP, NBKP, and the like; a mechanical pulp such as GP, PGW, RMP, TMP, CTMP, CMP, CGP, and the like; a waste paper pulp such as DIP, and the like; and those produced using various types of apparatus such as Fourdrinier machine, cylinder paper machine, and the like after mixing additives, if necessary, such as a pigment, a binder, a sizing agent, a fastening agent, a cationic agent, a strengthening agent for paper, and the like, can be used. In addition to these backing materials, a synthetic paper and a plastic film and sheet may be used, and thickness of the backing material is preferably 10 to 250 µm, and basis weight is desirably 10 to 250 g/m². The backing material may be provided with an ink receiving layer and a back coating layer as it is, or may be provided with an ink receiving layer and a back coating layer after it is provided with a size press or an anchor coat layer with starch or polyvinyl alcohol. Further, the backing material may be subjected to treatment for smoothing with a calendering device such as a machine calender, a TG calender, a soft calender, and the like. In the present invention, as a backing material, a paper laminated with a polyolefin (for example, polyethylene, polystyrene, polyethylene terephthalate, polybutene, and a copolymer thereof) at both surfaces and a plastic film are preferably used. Into a polyolefin, white pigments (for example, titanium oxide, zinc oxide) or toning dyes (for example, cobalt blue, ultramarine blue, neodymium oxide) are preferably added.

In the ink receiving layer provided on the carrier, a pigment or a water-based binder may be contained. As the pigment, a white pigment is preferable, including a white inorganic pigment such as calcium carbonate, kaolin, talc, clay, diatomaceous earth, synthetic amorphous silica, aluminum silicate, magnesium silicate, calcium silicate, aluminum hydroxide, alumina, lithopone, zeolite, barium sulfate, calcium sulfate, titanium dioxide, zinc sulfide, zinc carbonate, and the like; and an organic pigment such as a styrene rubber based pigment, an acrylic resin based pigment, a urea resin, a melamine resin, and the like. As a white pigment contained in the ink receiving layer, a porous inorganic pigment is preferable, in particular, synthetic amorphous silica having large pore area, and the like are suitable. As the synthetic amorphous silica, a silicic anhydride obtained by a dry production method, and a water-containing silicic acid obtained by a wet production method, can be used, and it is particularly desirable to use a water-containing silicic acid.

As the water-based binder contained in the ink receiving layer, a water-soluble polymer such as polyvinyl alcohol, silanol modified polyvinyl alcohol, starch, cation type starch, casein, gelatin, carboxyl methyl cellulose, hydroxyl ethyl cellulose, polyvinyl pyrrolidone, a polyalkylene oxide, derivatives of a polyalkylene oxide, and the like, and a water-dispersible polymer such as styrene-butadiene rubber latex, acrylic resin based emulsion, and the like, are exemplified. These water-based binders can be used alone or in combination with at least two kinds thereof. In the present invention, among these, especially polyvinyl alcohol and silanol modified polyvinyl alcohol are suitable from the points of adhesion property to a pigment, and resistance to peeling-off of an ink receiving layer. The ink receiving layer can contain, besides a pigment and a water-based bonding agent, a mordant, a water fastness modifier, a light fastness improver, a surfactant, and other additives.

As a mordant added in an ink receiving layer, for example, a polymer mordant is used.

A water fastness modifier is effective for modifying water fastness of an image, and as the water fastness modifier, a cationic resin is desirable, in particular. Such a cationic resin includes polyamide polyamine epichlorohydrin, polyethyleneimine, polyamine sulfone, a polymer of dimethyl diallyl ammonium chloride, cationic polyacrylamide, a colloidal silica, and the like, and among these cationic resins, particularly polyamide polyamine epichlorohydrin is suitable. Content of these cationic resins is preferably 1 to 15% by weight, particularly preferably 3 to 10% by weight, based on the total solid portion in an ink receiving layer.

The light fastness improver includes zinc sulfate, zinc oxide, a hindered amine type antioxidant, an ultra violet light absorber such as a benzophenone type and a benzotriazole type absorber, and the like. Among these, zinc sulfate is suitable.

A surfactant functions as a coating coagent, a peel improver, a slide improver, or an antistatic agent. Instead of a surfactant, an organic fluorocompound may be used. A hydrophobic organic fluorocompound is preferable. Examples of the organic fluorocompound include a fluorine-based surfactant, an oily state fluorine-based compound (for example, a fluoro-oil), and a solid state fluorocompound resin (for example, a tetrafluoroethylene resin). As the other additives added in an ink receiving layer, a pigment dispersing agent, a thickener, an antifoaming agent, dyes, a fluorescent whitener, a preservative, a pH adjustor, a matting agent, a hardener, and the like are exemplified. In this connection, the ink receiving layer may be one layer or two layers.

On a recording paper and a recording film, a back coating layer may be provided, and as a component possible to be added in this layer, a white pigment, a water-based binder, and other components are exemplified. White pigments contained in a backcoat layer includes, for example, white inorganic pigments such as precipitated calcium carbonate, ground calcium carbonate, kaoline, talc, calcium sulfate, barium sulfate, titan dioxide, zinc oxide, zinc sulfide, zinc carbonate, satin white, aluminum silicate, diatomite, calcium silicate, magnesium silicate, synthetic amorphous silica, colloidal silica, colloidal alumina, pseudo-boehmite, aluminum hydroxide, alumina, lithopone, zeolite, hydrated halloysite, magnesium carbonate and magnesium hydroxide; and organic pigments such as styrenic plastic pigments, acrylic plastic pigments, polyethylene, microcapsule, a urea-resin and a melanin-resin.

A water-based binder contained in a backcoat layer include poly(styrene-co-maleate salt), poly(styrene-co-acrylate salt); water-soluble polymers such as polyvinyl alcohol, silanol modified polyvinyl alcohol, starch, cationic starch, casein, gelatin, carboxymehthylcellulose, hydroxyehthylcellulose and polyvinylpyrrolidone; and water dispersible polymers such as styrene-butadiene latex, acrylic emulsion, etc. The other components contained in the back coating layer includes an antifoaming agent, a foam inhibiting agent, dyes, a fluorescent whitener, antiseptics, a water fastness modifier, and the like.

In a composing layer of an ink-jet recording paper and a recording film (containing a back coating layer), polymer latex may be added. The polymer latex is used to improve physical properties of a membrane such as for dimensional stabilization, curling prevention, adhesion prevention, and crazing prevention of a membrane. When polymer latex having low glass transition temperature (of not higher than 40ºC) is added in a layer containing a mordant, crazing or curling of the layer can be prevented. Moreover, when polymer latex having high glass transition temperature is added in a back coated layer, curling of the layer can also be prevented.

These recording papers and recording films are generally called as a paper for professional of an ink-jet, a glossy paper or a glossy film, and they are commercially sold, for example, as Pictoriko (trade name: manufactured by Asahi Glass Co. Ltd.), Color BJ Paper, High Quality Professional Paper, Color BJ Photofilm Sheet, Super Photopaper, Professional Photopaper (all of these are trade names: manufactured by Canon Inc.), Paper for Color Image Jet (trade name: manufactured by Sharp Corporation.), Paper for PM Photo, Glossy Film Professional for Super Fine Use (all of these are trade names: manufactured by Epson Co., Ltd.), PictaFine (trade name: manufactured by Hitachi Maxell, Ltd.), and the like. Especially, an ink-jet recording method using an ink according to the present invention functions particularly effectively on a recording paper and a recording film having an image receiving layer with an ink, which layer, as a recording material, contains white inorganic pigment particles on a carrier. In this connection, it is naturally utilizable also to a usual paper.

A colored article according to the present invention is one obtained by coloring a material to be colored with the above-described ink using an ink-jet printer. A material to be colored is not limited in particular as long as it is the above-described recording material or other materials possible to be colored with an ink-jet printer.

To record on a recording material by an ink-jet recording method according to the present invention, it is enough to record on a recording material in a usual method, for instance, after setting a container containing the above-described ink at a predetermined position of an ink-jet printer. The ink-jet printer, for example, includes a piezo-type printer utilizing mechanical vibration, a bubble-jet printer (trade mark) utilizing foams generated by heating, and the like.

The ink according to the present invention does not occur precipitation and separation during storage. Furthermore, when the ink according to the present invention is used in ink-jet printing, a jetting device (an ink head) is not clogged. The ink according to the present invention does not cause change in physical properties even under constant recirculation for a comparatively long period by a continuous ink-jet printer, or on intermittent use by an on-demand style ink-jet printer.

An ink of the present invention exhibits a clear cyan color when a preferable colorant is used. Moreover, according to the ink, a recorded article especially excellent in ozone fastness, light fastness and water fastness can be obtained. By using it as a set of dark-and-light cyan inks, a recorded article which is further excellent in ozone fastness, light fastness and water fastness can be obtained. Furthermore, by using it together with other inks such as yellow, magenta and, if necessary, green, red, orange, blue, and the like, color tones of a broad visible range can be exhibited, and a recorded article excellent in ozone fastness, and also excellent in light fastness and water fastness can be obtained.

### Examples

The present invention is more specifically explained by Examples as follows, however, the present invention should not be limited thereto. In this connection, "part" and "%" in the specification are based on weight unless otherwise specified.

### Example 1-1

Synthesis of the compound of Formula (1), wherein M is copper, having two unsubstituted sulfamoyl groups and two substituted sulfamoyl groups of Formula (3) positioned at the β-position, and in Formula (3), R₁₇ is a 2-sulfoethyl group and R₁₈ is a hydrogen atom:
(1) Synthesis of copper phthalocyanine tetrasulfonic acid tetrasodium salt (a substitution type at the β-position) (A compound of Formula (5) wherein, M is Cu, all of a, b, c and d are 1, and all of L are Na)
   To a four-necked flask provided with a cooling tube, 40 parts of sulfolane is added, and a temperature thereof was raised to 180 ºC in one hour. Therein, 40 parts of a monosodium salt of 4-sulfophthalic acid, 4.5 parts of ammonium chloride, 55 parts of urea, 0.5 parts of ammonium molybdate, and 6 parts of copper (II) chloride were added, stirred at the same temperature for 6 hours. After the reaction solution was cooled to 40 ºC, an objective substance was filtered with Nutsche, and washed with 400 parts of methanol. Subsequently, 300 parts of water was added to a wet cake obtained, and pH thereof was adjusted to 11 using a 48% aqueous solution of NaOH, and the solution was stirred at 80 ºC for one hour. A 35% aqueous solution of hydrochloric acid was added threto while stirring to make pH thereof 3, then gradually added thereto 80 parts of sodium chloride. Crystals deposited were filtered and washed with 150 parts of a 20% aqueous solution of sodium chloride to obtain 90 parts of a wet cake. Then, 210 parts of methanol was added thereto. After stirring for one hour, thus deposited crystals were separated by filtration, washed with 300 parts of a 70% aqueous solution of methanol and dried to obtain 22.9 parts of copper phthalocyanine tetrasulfonic acid tetra sodium salt of a substitution type at the β-position, according to Formula (5), as blue crystals. λmax: 629 nm (in an aqueous solution).
(2) Synthesis of copper phthalocyanine tetrasulfonic acid chloride (a substitution type at the β-position; a compound represented by Formula (6) wherein M is copper)
   Into 79 parts of chlorosulfonic acid, 9.8 parts of copper phthalocyanine tetrasulfonic acid tetrasodium salt were gradually added while stirring at not higher than 60ºC, and reacted at 120ºC for 4 hours, cooled to 80ºC, dropwise added 47.6 parts of thionyl chloride over 30 min, and reacted at 80ºC for 2 hours, then at 90ºC for one hour. The reaction solution was cooled to not higher than 30ºC, and slowly poured into 700 parts of ice water. Dedeposited crystals were filtered, and washed with 200 parts of a 2% aqueous solution of hydrochloric acid cooled with ice to obtain 35.2 parts of a wet cake of copper phthalocyanine tetrasulfonic acid chloride.
(3) Synthesis of an objective compound (a compound substituted at the β-position)
   Into 100 parts of ice water, 17.6 parts of the wet cake of copper phthalocyanine tetrasulfonic acid chloride obtained in (2) were added, and suspended by stirring. After 10 min, a 28% aqueous ammonium was added dropwise thereto while maintaining them at not higher than 5ºC, and pH thereof was adjusted to 9.0. Then, an aqueous solution obtained by dissolving 1.3 parts of taurine into 50 parts of water was poured into said suspension. The reaction was conducted at 10ºC for 2 hours, 20ºC for 2 hours, and then at 50ºC for one hour while maintaining pH of 9.0 by adding a 28% ammonium aqueous solution. Water was added thereto to adjust the solution amount to 200 parts, and 30 parts of sodium chloride was added therein to precipitate crystals. Thus precipitated crystals were filtrated to separate them and washed with 200 parts of a 15% aqueous solution of sodium chloride to obtain 44.3 parts of a wet cake. Again, all of the wet cake was dissolved in water and whole amount was adjusted to 200 parts. After raising temperature to 60ºC, 10 parts of sodium chloride were added into the resultant solution. The solution was adjusted pH thereof to 2 by the addition of a 35% aqueous solution of hydrochloric acid to deposit crystals. Thus deposited crystals were filtrated, then washed with 100 parts of a 5% aqueous solution of sodium chloride to obtain 31.8 parts of a wet cake of the compound represented by No.1.
   The wet cake obtained of 31.8 parts was added into 260 parts of methanol, after addition of 13 parts of water, stirred at 60ºC for one hour to make suspension, filtered, washed with methanol, and dried to obtain 4.3 parts of blue crystals.
   This colorant has not less than 75% of a compound substituted at the β-position, λmax of 603.0 nm in water and solubility of 10% (in water at pH 9.0). By estimation from the reaction and the charged amount of a raw material, it is a compound of Formula (8) (substituted position is not specified and shown as a free acid form), wherein m is 2 and n is 2. However, as a result of analysis with a liquid chromatograph mass analyzer, a sulfonic acid group was also confirmed, therefore, by considering other analyzing results also, value of l (a sulfonic acid group) is supposed to be about 0.3, and value of n (a substituted sulfamoyl group) is supposed to be 0.3 to 2, and therefore the residue is m (an unsubstituted sulfamoyl group), and the total of l, m and n is 4 are thought to be close to an actual fact.

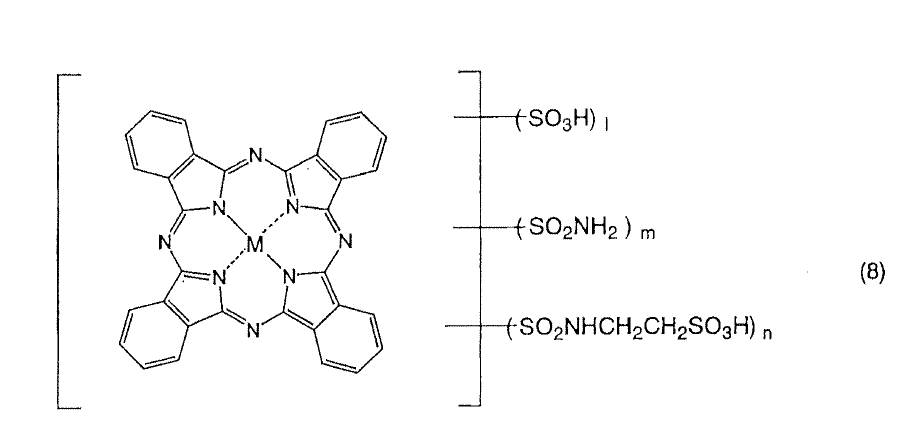

### Example 1-2 (Evaluation of an ink)

### (A) Preparation of an ink

An ink was obtained by mixing and dissolving each component as described in Table 6 below, and by filtration with a 0.45 µm membrane filter (manufactured by Advantec Co., Ltd.). In this connection, ion-exchanged water was used as water. Water and caustic soda (a pH adjustor) were added to make pH of an ink to 9, and make total amount thereof to 100 parts. As for an ink, an ink using a compound of Example 1-1 was referred to as C-1.

**Table 6**

| | |
|---|---|
| A compound obtained in Example 1-1 | 1.3 parts |
| Water + Caustic soda | 79.6 parts |
| Glycerin | 5.0 parts |
| Urea | 5.0 parts |
| N-methyl-2-pyrrolydone | 4.0 parts |
| IPA (Isopropyl alcohol) | 3.0 parts |
| Butyl carbitol | 2.0 parts |
| Surfinol 104PG50 (Trade name: manufactured by Nissin Chemical Co., | |
| Ltd.) | 0.1 parts |
| Total | 100.0 parts |

As a Comparative Example, a colorant for ink-jet recording generally used as Direct Blue 199, product name: Projet Cyan 1 (manufactured by Abesia Chemical Co., Ltd.: Comparative Example 1) and a phthalocyanine compound synthesized and purified by a method as described in Example 1 of the above-described Reference 8 (Comparative Example 2) were prepared in the same method so that the same printing density was obtained on printing as with an ink of Example 1-1 in Table 6. An ink using a product of Comparative Example 1 was referred to as C-A, and an ink using a product of Comparative Example 2 was referred to as C-B.

### (B) Ink-jet printing

Using an ink-jet printer (trade name BJ S630 manufactured by Canon Inc.), ink-jet printing was conducted on two types of Professional Paper A (a high quality professional paper, HR-101S manufactured by Canon Inc.) and Professional Paper B (hp premier professional paper for ink-jet printing, Q1948A manufactured by Hewlett Packard Co.).

### (C) Evaluation of a recorded image

### 1. Evaluation of hue

Measurement of hue of a recorded print image was conducted by colorimetry of a recorded paper using a colorimetric system (GRETAG SPM50: manufactured by GRETAG Co., Ltd.), and a* and b* values were measured within the range of 40 to 80 of L* of a printed matter. The results were evaluated by 3 stages based on definition of preferable a* value being -60 to -20 and preferable b* value being -60 to -20.
○: both a* and b* values reside in the preferable range.
Δ: only one of a* and b* values resides in the preferable range.
×: both a* and b* values reside outside of the preferable range.

### 2. Light fastness test

A test piece of a recorded print image was irradiated for 50 hours at light intensity of 0.36 W/m², under conditions of temperature of 24ºC and humidity of 60% RH in a vessel, using a xenon weatherometer (Type: Ci4000 manufactured by ATLAS Co. , Ltd.). After the test, in the range of reflection density (D value) of 0.90 to 1.10, reflection densities before and after the test were measured using the above-described colorimetric system. After the measurement, residual ratio of colorants was calculated by (reflection density after testing/reflection density before testing)x100 (%), and evaluated by 3 stages:
○: residual ratio of not lower than 70%;
Δ: residual ratio of 50 to 70%; and
×: residual ratio of lower than 50%.

### 3. Ozone fastness

A test piece of a recorded print image was exposed for 3 hours at ozone concentration of 12 ppm, at temperature of 24ºC and at humidity of 60% RH in a vessel, using an ozone weatherometer (Type: OMS-H manufactured by Suga Testing Machine Co., Ltd.). After the test, in the range of reflection density (D value) of 0.90 to 1.10, reflection densities before and after the test were measured using the above-described colorimetric system. After the measurement, residual ratio of colorants was calculated by (reflection density after testing/reflection density before testing) × 100 (%), and evaluated by 3 stages:
○: residual ratio of not lower than 70%;
Δ: residual ratio of 40 to 70%; and
×: residual ratio of lower than 40%.

### 4. Moisture fastness

A test piece of a recorded print image was stored for 3 days at temperature of 50ºC and at humidity of 90% RH in a vessel, using a thermo-hygrostat (manufactured by Ouyogiken-Sangyosya Co., Ltd.). After the test, bleeding of a test piece was visually evaluated by 3 stages:
○: bleeding is not confirmed;
Δ: slight bleeding is confirmed; and
×: much bleeding is confirmed.

Concerning recorded printing images with an ink (C-1) using a compound obtained in Example 1-1, evaluation of hue and test results of light fastness, ozone fastness and moisture fastness thereof are shown in Table 7 (Professional Paper A) and Table 8 (Professional Paper B).

**Table 7**

| Evaluation result of an ink: Professional Paper A | | | | |
|---|---|---|---|---|
| Ink No. | Hue | Light Fastness | Ozone F. | Moisture F. |
| C-1 | ○ | ○ | ○ | ○ |
| C-A | ○ | ○ | × | ○ |
| C-B | ○ | ○ | × | ○ |

**Table 8**

| Evaluation result of an ink: Professional Paper B | | | | |
|---|---|---|---|---|
| Ink No. | Hue | Light Fastness | Ozone F. | Moisture F. |
| C-1 | ○ | ○ | ○ | ○ |
| C-A | ○ | ○ | × | ○ |
| C-B | ○ | ○ | × | ○ |

As apparent from Tables 7 and 8, a cyan ink using a compound of the present invention has excellent hue, along with excellent light fastness, ozone fastness and moisture fastness. It is apparent that it has particularly excellent ozone fastness.

### Example 1-3 (an ink set)

In an ink-jet printer (trade name: BJ F850 manufactured by Canon Inc.) having a cyan ink set provided with two concentrations of a light cyan and a dark cyan, C-1 as a light cyan ink and a genuine cyan ink manufactured by Canon Inc. as a dark cyan ink, were mounted and ink-jet printing was conducted on two types of Professional Paper A (a high quality professional paper, HR-101S manufactured by Canon Inc.) and Professional Paper B (hp premier professional paper for ink-jet printing, Q1948A manufactured by Hewlett Packard Co.). As to printing result, there was no generation of dot deletion, and satisfactory clear-prints even as full-colored image printing could be obtained. As the result, it was confirmed that an ink according to the present invention can be used in an ink-jet printer having a cyan ink set provided with two concentrations of a light cyan and a dark cyan.

### Example 2-1

(1) Sulfophthalocyanine substituted at the β-position was obtained according to Example 1 described in the Patent Literature 8.
   To a four-necked flask provided with a cooling tube, 40 parts of sulfolane was added, and temperature thereof was raised to 180 ºC in one hour. Therein, 40 parts of 4-sulfophthalic acid, 4.5 parts of ammonium chloride, 55 parts of urea, 0.5 parts of ammonium molybdate, and 6 parts of copper (II) chloride were added, and stirred at the same temperature for 6 hours. After the reaction solution was cooled to 40 ºC, an objective product was filtered with Nutsche, and washed with 400 parts of methanol. Subsequently, 300 parts of water was added to a wet cake obtained, and pH thereof was adjusted to 10 using a 48% aqueous solution of NaOH, and stirred at 80 ºC for one hour. A 35% aqueous solution of hydrochloric acid was added thereto while stirring, to make pH 3, then gradually added thereto 80 parts of sodium chloride. Crystals deposited were filtered off and washed with 150 parts of a 20% aqueous solution of sodium chloride to obtain 90 parts of a wet cake. Then, 210 parts of methanol was added thereto, and stirred for one hour, separated deposited crystal by filtration, washed with 300 parts of a 70% aqueous solution of methanol and dried to obtain 22.9 parts of phthalocyanine substituted at the β-position, wherein M' is a sodium salt, as blue crystals. λmax: 629 nm (in an aqueous solution).
(2) Into 69.1 parts of chlorosulfonic acid, 9.84 parts of a compound obtained in (1) was gradually added while stirring at not higher than 70ºC and reacted at 120ºC for 4 hours. After the reaction, the reaction solution obtained by cooling was poured into 300 parts of ice water to decompose residual chlorosulfonic acid. Deposited crystal was filtrated, washed with 67 parts of ice water to obtain 37.2 parts of a wet cake.
(3) Into 130 parts of ice water, 37.2 parts (0.01 mol) of the wet cake obtained in (2) was added, and stirred for 30 minutes at not higher than 5ºC. By adding ammonia water, pH was adjusted at 10 to 10.5 while maintaining temperature at 0 to 5ºC. Reaction was continued for 1 hour under this condition, then 1 hour at 25ºC and further 1 hour at 60ºC while maintaining pH at 9.5 to 10.0 to obtain 360 parts of a reaction mixed solution. This reaction mixture was adjusted to temperature of 60ºC and pH of 7.0 by a 10% HCl solution and 72 parts of sodium chloride was gradually added. After stirring for 30 minutes, deposited crystal was filtrated to obtain 40.2 parts of a wet cake.
(4) Into 200 parts of methanol was added 40.2 parts of the wet cake obtained in (3) while stirring and continued stirring for 1 hour. Crystals were filtered, washed with 50 parts of methanol to obtain a wet cake. Thus obtained wet cake was added again into 150 parts of methanol and the wet cake obtained (18.5 parts) was dried to obtain 9.3 parts of a colorant mixture. This colorant mixture had not lower than 75% of the β-substituted compound and λmax of 605.5 nm in water and contained Cl⁻ : not higher than 0.1% , SO₄²⁻: not higher than 0.1%, Fe: not higher than 100 ppm, Zn: not higher than 100 ppm and Ca: not higher than 200 ppm.

### Example 2-2

Similarly as in Example 2-1, chlorination was carried out in 46.0 use parts of chlorosulfonic acid to obtain 36.0 parts of a wet cake, a colorant mixture having lower conversion ratio to a sulfamoyl group than in the colorant mixture obtained in Example 1. This mixture was then subjected to reaction with ammonia water and purification similarly as in Example 2-1 to obtain 9.1 parts of a dry substance (a colorant mixture). This colorant mixture has not lower than 75% of the β-substituted compound and λ max of 605.5 nm in water and contained Cl⁻: not higher than 0.1%, SO₄²⁻: not higher than 0.1%, Fe: not higher than 100 ppm, Zn: not higher than 100 ppm and Ca: not higher than 200 ppm.

### Example 2-3

Similarly as in Example 2-1, chlorination was carried out in 34.6 use parts of chlorosulfonic acid to obtain 36.6 parts of a wet cake, a colorant mixture having lower conversion ratio to a sulfamoyl group than in the colorant mixture obtained in Example 2. This mixture was then subjected to reaction with ammonia water and purification similarly as in Example 2-1 to obtain 8.8 parts of a dry substance (a colorant mixture). This colorant mixture has not lower than 75% of the β-substituted compound and λmax of 611.0 nm in water and contained Cl⁻: not higher than 0.1%, SO₄²⁻: not higher than 0.1%, Fe: not higher than 100 ppm, Zn: not higher than 100 ppm and Ca: not higher than 200 ppm.

### Example 2-4

(1) Into 46.0 parts of chlorosulfonic acid, 9.84 parts of a compound obtained in Example 2-1(1) was gradually added while stirring at not higher than 70ºC and reacted at 120ºC for 4 hours. After cooling the reaction solution down to 80ºC, 9.52 parts of thionylchloride was added dropwise and reacted for 2 hours at the same temperature. The reaction solution obtained was poured into 200 parts of ice water to decompose residual chlorosulfonic acid and thionylchloride. After removing sulfurous acid in a solution by hydrogen peroxide water, deposited crystal was filtrated, washed with 67 parts of ice water to obtain 35.0 parts of a wet cake.
(2) Similarly as in Example 2-1 (3), the wet cake was reacted with ammonia water and purified similarly to obtain 10.4 parts of a dried substance (a colorant mixture). This colorant mixture had not lower than 75% of the β-substituted compound and λmax of 603.0 nm in water and, taking into consideration of other analysis results also, sulfamoyl conversion ratio was equivalent to that of a colorant mixture obtained in Example 1.

This colorant mixture contained Cl⁻: not higher than 0.1%, SO₄²⁻: not higher than 0.1%, Fe: not higher than 100 ppm, Zn: not higher than 100 ppm and Ca: not higher than 200 ppm.

### Example 2-5 (Evaluation of an ink)

### (A) Preparation of an ink

An ink was obtained by mixing and dissolving each component as described in Table 9 below, and by filtration with a 0.45 µm membrane filter (manufactured by Advantec Co., Ltd.). In this connection, ion-exchanged water was used as water. Water and caustic soda (a pH adjustor) were added to make pH=8-10 of an ink, and make total amount thereof to 100 parts. An ink using an colorant mixture of Example 2-1 was referred to as C-1 and inks using Examples 2-2 to 2-4 were referred to as C-2 to C-4, respectively.

**Table 9**

| | |
|---|---|
| Each colorant mixture obtained in Examples 2-1 to 2-4 | |
| | 0.9 parts |
| Water + Caustic soda | 80.6 parts |
| Glycerin | 5.0 parts |
| Urea | 5.0 parts |
| N-methyl-2-pyrrolydone | 4.0 parts |
| IPA (Isopropyl alcohol) | 3.0 parts |
| Butyl carbitol | 2.0 parts |
| Surfinol 104PG50 (manufactured by Nissin Chemical Co., Ltd.) | |
| | 0.1 parts |
| Total | 100.0 parts |

As a Comparative Example, a colorant for ink-jet recording generally used as Direct Blue 199, product name: Projet Cyan 1 (manufactured by Abesia Chemical Co., Ltd.: Comparative Example 1) and a colorant mixture synthesized and purified by a method as described in Example 1 of the above-described Patent Reference 8 (Comparative Example 2) were formulated for inks in the same method so that the same printing density was obtained on printing as with inks C-1 to C-4. An ink using a product of Comparative Example 1 was referred to as C-A, and an ink using a colorant mixture of Comparative Example 2 was referred to as C-B.

### (B) Ink-jet printing

Using an ink-jet printer (trade name BJ S630 manufactured by Canon Inc.), ink-jet printing was conducted on two types of Professional Paper (a high quality professional paper, HR-101 manufactured by Canon Inc.) and Glossy Paper (a professional photo paper PR-101 manufactured by Canon Inc.).

### (C) Evaluation of a recorded image

### 1. Evaluation of hue

Measurement of hue of a recorded print image was conducted by colorimetry of a recorded paper using a colorimetric system (GRETAG SPM50: manufactured by GRETAG Co., Ltd.), and a* and b* values were measured within the range of 50 to 90 of L* of a printed matter. The results were evaluated by 3 stages based on definition of preferable a* value being -50 to -10 and preferable b* value being -50 to -10.
○: both a* and b* values reside in the preferable range.
Δ: only one of a* and b* values resides in the preferable range.
×: both a* and b* values reside outside of the preferable range.

### 2. Light fastness test

A test piece of a recorded print image was irradiated for 50 hours at light intensity of 0.36 W/m², under conditions of temperature in a vessel of 24ºC and humidity of 60% RH, using a xenon weatherometer (Type: Ci4000 manufactured by ATLAS Co., Ltd.). After the test, in the range of reflection density (D value) of 0.70 to 0.85, reflection densities before and after the test were measured using the colorimetric system. After the measurement, residual ratio of colorants was calculated by on (reflection density after testing/reflection density before testing) × 100 (%), and were evaluated by 3 stages:
○: residual ratio of not lower than 70%;
Δ: residual ratio of 50 to 70%; and
×: residual ratio of lower than 50%.

### 3. Ozone fastness

A test piece of a recorded print image was exposed for 3 hours at ozone concentration of 12 ppm, at temperature of 24ºC and at humidity of 60% RH in a vessel, using an ozone weatherometer (Type: OMS-H manufactured by Suga Testing Machine Co., Ltd.). After the test, in the range of reflection density (D value) of 0.70 to 0.85, reflection densities before and after the test were measured using the above-described colorimetric system. After the measurement, residual ratio of colorants was determined by calculation based on (reflection density after testing/reflection density before testing) × 100 (%), and evaluation results were ranked by 3 stages:
○: residual ratio of not lower than 70%;
Δ: residual ratio of 40 to 70%; and
×: residual ratio of lower than 40%.

### 4. Moisture fastness

A test piece of a recorded print image was stored for 3 days at temperature of 50ºC and at humidity of 90% RH in a vessel, using a thermo-hygrostat (manufactured by Ouyogiken-Sangyosya Co., Ltd.). After the test, bleeding of a test piece was visually evaluated by 3 stages:
○: bleeding is not confirmed;
Δ: slight bleeding is confirmed; and
×: much bleeding is confirmed.

Concerning recorded printing images with inks (C-1 to C-4) using colorant mixtures obtained in Examples 2-1 to 2-4, evaluation of hue and test results of light fastness, ozone fastness and moisture fastness thereof are shown in Table 10 (Professional Paper) and Table 11 (Glossy Paper).

**Table 10**

| Evaluation result of an ink: Professional Paper | | | | |
|---|---|---|---|---|
| Ink No. | Hue | Light Fastness | Ozone F. | Moisture F. |
| C-1 | ○ | ○ | ○ | ○ |
| C-2 | ○ | ○ | ○ | ○ |
| C-3 | ○ | ○ | ○ | ○ |
| C-4 | ○ | ○ | ○ | ○ |
| C-A | ○ | ○ | × | ○ |
| C-B | ○ | ○ | × | ○ |

**Table 11**

| Evaluation result of an ink: Glossy Paper | | | | |
|---|---|---|---|---|
| Ink No. | Hue | Light Fastness | Ozone F. | Moisture F. |
| C-1 | ○ | ○ | ○ | ○ |
| C-2 | ○ | ○ | ○ | ○ |
| C-3 | ○ | ○ | ○ | ○ |
| C-4 | ○ | ○ | ○ | ○ |
| C-A | ○ | ○ | × | ○ |
| C-B | ○ | ○ | × | ○ |

As apparent from Tables 10 and 11, a cyan ink using a colorant mixture of the present invention has excellent hue, along with excellent light fastness, ozone fastness, and moisture fastness. It is apparent that it has particularly excellent ozone fastness.

### Example 2-6 (an ink set)

In an ink-jet printer (trade name: BJ F850 manufactured by Canon Inc.) having a cyan ink set provided with two concentrations of a light cyan and a dark cyan, C-1 as a light cyan ink, and a genuine cyan ink manufactured by Canon Inc., as a dark cyan ink, were mounted, and ink-jet printing was conducted on two types of Professional Paper (a high quality professional paper, HR-101 manufactured by Canon Inc.) and Glossy Paper (a professional photo paper PR-101 manufactured by Canon Inc.). As to printing result, there was no generation of dot deletion, and satisfactory clear-prints as even as full-colored image printing could be obtained. As the result, it was confirmed that an ink according to the present invention can be used in an ink-jet printer having a cyan ink set provided with two concentrations of a light cyan and a dark cyan.

### Industrial Applicability

An ink using a phthalocyanine compound of the present invention has a favorable hue as a cyan ink, and the like, and excellent light fastness, ozone fastness and moisture fastness. Further, it does neither exhibit crystal deposition, nor change in physical properties, nor change in color after a long period of storage, and thus storage stability is favorable. Further, by combined use with other magenta ink and yellow ink, color tone in a broad visible region can be obtained. Therefore, the ink using a phthalocyanine colorant according to the present invention, especially a cyan ink, is extremely useful as an ink used for ink-jet recording.

## Claims

1. A phthalocyanine colorant represented by Formula (1): 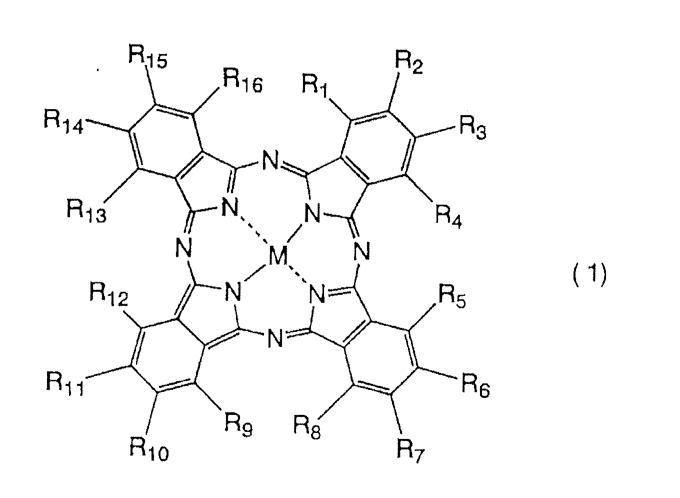 [in Formula (1), M represents a hydrogen atom, a metal atom, a metal oxide, a metal hydroxide, or a metal halide; R₂, R₃, R₆, R₇, R₁₀, R₁₁, R₁₄ and R₁₅ each independently represent an unsubstituted sulfamoyl group represented by Formula (2), a substituted sulfamoyl group represented by Formula (3), or a hydrogen atom, provided that at least one of R₂, R₃, R₆, R₇, R₁₀, R₁₁, R₁₄ and R₁₅ is an unsubstituted sulfamoyl group, and at least one thereof is a substituted sulfamoyl group represented by Formula (3); and R₁, R₄, R₅, R₈, R₉, R₁₂, R₁₃ and R₁₆ represent hydrogen atoms; the sum of a number of an unsubstituted sulfamoyl group and a total number of a substituted sulfamoyl group is 2 to 4, and a number of an unsubstituted sulfamoyl group is 1 to 3 and a number of a substituted sulfamoyl group is 1 to 3.]:
-SO₂NH₂ (2) 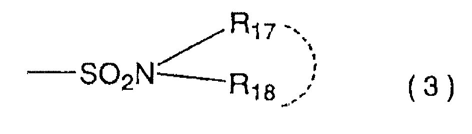
, in Formula (3), R₁₇ and R₁₈ each independently represent a hydrogen atom, a substituted or unsubstituted alkyl group, a substituted or unsubstituted cycloalkyl group, a substituted or unsubstituted aralkyl group, a substituted or unsubstituted aryl group, a substituted or unsubstituted heterocyclic group, and a substituted or unsubstituted alkenyl group; R₁₇ and R₁₈ may form a ring by bonding together except when both R₁₇ and R₁₈ represent a halogen atom; and at least one of R₁₇ and R₁₈ has an ionic and hydrophilic group as a substituent.

2. The phthalocyanine colorant according to Claim 1, wherein Formula (1) according to Claim 1 wherein M is Cu, is represented by Formula (4): 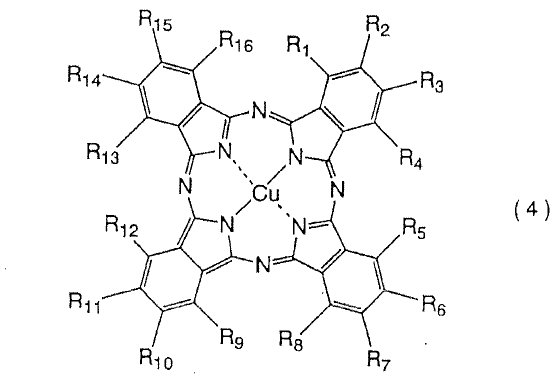 , in Formula (4), R₁ to R₁₆ mean the same as in Formula (1).

3. The phthalocyanine colorant according to Claim 1 or Claim 2, wherein in each of combinations of R₂ and R₃, R₆ and R₇ , R₁₀ and R₁₁, and R₁₄ and R₁₅, one member of each combination is a hydrogen atom, and the other is an unsubstituted sulfamoyl group represented by Formula (2), a substituted sulfamoyl group represented by Formula (3) or a hydrogen atom, and among R₂, R₃, R₆, R₇ , R₁₀, R₁₁, R₁₄ and R₁₅, at least one is an unsubstituted sulfamoyl group and at least one is a substituted sulfamoyl group represented by Formula (3).

4. The phthalocyanine colorant according to any one of Claims 1 to 3, wherein R₁₇ and R₁₈ each independently represent a hydrogen atom, an alkyl group (which may be substituted with a substituent selected from a group consisting of a sulfonic acid group, a carboxyl group, a hydroxyl group, an alkoxyl group, a dialkylamino group, an arylamino group, an aryl group, a halogen atom and a cyano group), a phenyl group (which may be substituted with one or more substituents selected from a group consisting of a sulfonic acid group, a carboxyl group, a hydroxyl group, a dialkylamino group, an arylamino group, an acetylamino group, a ureido group, an alkyl group, an alkoxyl group, a nitro group, a cyano group, a heterocyclic group and a halogen atom), a naphthyl group (which may be substituted with a sulfonic acid group or a hydroxyl group), a benzyl group (which may be substituted with a sulfonic acid group) and a phenethyl group (which may be substituted with a sulfonic acid group).

5. The phthalocyanine colorant according to any one of Claims 1 to 3, wherein R₁₇ is a hydrogen atom, a carboxyl(C1 to C5)alkyl group, a (C1 to C5)alkyl group, a hydroxyl(C1 to C5)alkyl group and a sulfo (C1 to C5)alkyl group; and R₁₈ is a phenyl group having a sulfo (C1 to C5)alkyl group, a carboxyl (C1 to C5)alkyl group, a sulfonic acid group, a carboxyl group or a hydroxyl group, a benzotriazolyl group substituted with a phenyl group having a di(sulfo(C1 to C5)alkyl) amino(C1 to C5)alkyl group, a sulfonic acid group, a carboxyl group or a hydroxyl group, a phenyl group substituted with a benzotriazol group having a sulfonic acid group, a carboxyl group or a hydroxyl group, a naphthyl group having a sulfonic acid group or a hydroxyl group, a uracil group having a sulfonic acid group, a carboxyl group or a hydroxyl group, a triazol group having a sulfonic acid group, a carboxyl group or a hydroxyl group, a thiazolyl group having a sulfonic acid group, a carboxyl group or a hydroxyl group, a benzothiazolyl group having a sulfonic acid group, a carboxyl group or a hydroxyl group, a pyridine group having a sulfonic acid group, a carboxyl group or a hydroxyl group, and a benzimidazolyl group having a sulfonic acid group, a carboxyl group or a hydroxyl group.

6. The phthalocyanine colorant according to Claim 1, wherein content of the colorant represented by Formula (1) is at least not less than 60% based on total colorants.

7. The phthalocyanine colorant according to any one of Claims 1 to 5, wherein the colorant represented by Formula (1) is obtained by subjecting the phthalocyanine colorant represented by Formula (5): 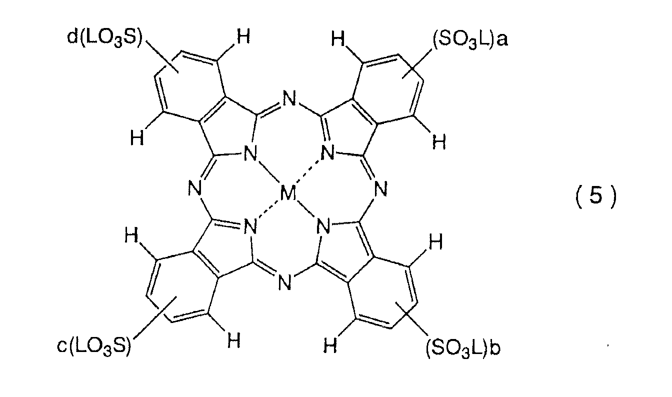 (in Formula (5),respectively, M represents a hydrogen atom, a metal atom, a metal oxide or a metal halide; L represents a proton, an alkaline metal ion, an alkaline earth metal ion and an onium ion of an organic amine or ammonium ion; and a, b, c and d are 0 or 1, provided that the sum thereof is an integer of 2 to 4) or a salt thereof to reaction with a chlorinating reagent to convert a sulfonic acid group to a chlorosulfonyl group and subsequent reaction with an amidating reagent in the presence of an organic amine.

8. A phthalocyanine colorant obtained by subjecting 4-sulfophthalic acid derivatives themselves to reaction with a metallo compound in the presence of the metallo compound, followed by subjecting thus obtained sulfometallophthalocyanine compound or a salt thereof to reaction with a chlorinating reagent to convert a sulfonic acid group to a chlorosulfonyl group and subsequent reaction with an amidating reagent and an organic amine.

9. An ink **characterized by** comprising the phthalocyanine colorant according to any one of Claims 1 to 8, as a colorant component.

10. The ink according to Claim 9, wherein an organic solvent
is contained.

11. The ink according to Claim 9 or claim 10, which is used for ink-jet recording.

12. An ink set **characterized, in** an ink-jet printer using not less than 2 kinds of cyan inks with different colorant density, by using, as at least one kind therefore, the ink according to any one of Claim 9 or 11.

13. An ink-jet recording method **characterized by** using the ink according to any one of Claims 9 to 11 or the ink set according to Claim 12, in an ink-jet recording method wherein the recording is carried out onto a recording material by discharging ink droplets in response to recording signals.

14. The ink-jet recording method according to Claim 13 wherein the recording material is an information transmission sheet.

15. Then ink-jet recording method according to Claim 14 wherein the information transmission sheet is a surface treated sheet having an ink image receiving layer containing white inorganic pigment particles on a carrier.

16. A container containing the ink or the ink set according to any one of Claims 9 to 12.

17. An ink-jet printer having the container according to Claim 16.

18. A colored product colored with the ink or the ink set according to any one of Claims 9 to 12.

19. A method for production of a phthalocyanie colorant **characterized by** subjecting 4-sulfophthalic acid derivatives to reaction with themselves or subjecting a 4-sulfophthalic acid derivative to reaction with a phthalic acid (phthalic anhydride) derivative in the presence of a copper compound, followed by subjecting thus obtained compound or a salt thereof to reaction with a chlorinating reagent to convert a sulfonic acid group to a chlorosulfonyl group and subsequent reaction with an amidating reagent and an organic amine.

20. A phthalocyanine colorant wherein, in the phthalocyanine colorant represented by the following general Formula (9): 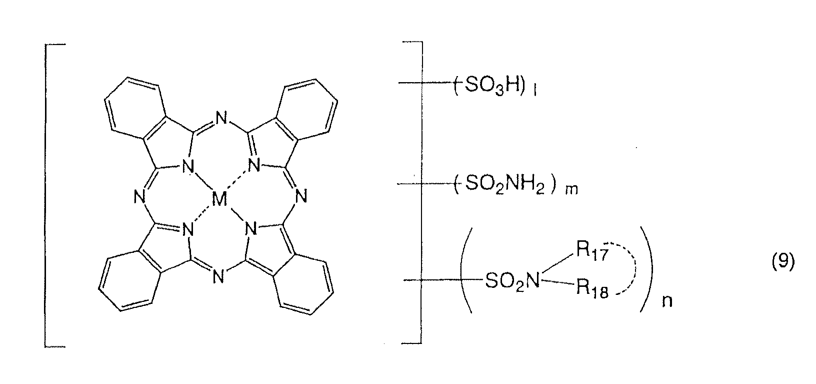 (wherein M represents a hydrogen atom, a metal atom, a metal oxide, a metal hydroxide or a metal halide; 1 includes 0 and smaller than 1; m is not smaller than 1 and not larger than 3.7; n is not smaller than 0.3 and not larger than 3; sum of 1, m and n is not smaller than 2 and not larger than 4; R₁₇ and R₁₈ each independently represent a hydrogen atom, a substituted or unsubstituted alkyl group, a substituted or unsubstituted cycloalkyl group, a substituted or unsubstituted aralkyl group, a substituted or unsubstituted aryl group, a substituted or unsubstituted heterocyclic group, and a substituted or unsubstituted alkenyl group; R₁₇ and R₁₈ may form a ring by bonding together, provided that except when both R₁₇ and R₁₈ represent a hydrogen atom; and at least one of R₁₇ and R₁₈ has an ionic and hydrophilic group as a substituent.),
a β-substituted compound is not less than 60% and an α -substituted compound is not more than 40%.

21. A mixture of colorants represented by the following general Formula (10): 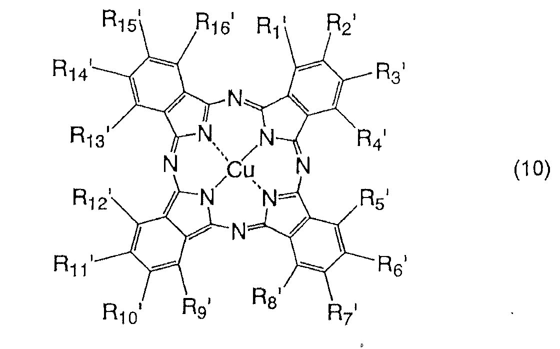 {wherein R₂', R₃', R₆', R₇', R₁₀', R₁₁', R₁₄' and R₁₅' each independently represent an unsubstituted sulfamoyl group (-SO₂NH₂), a sulfone group (-SO₃M') or a hydrogen atom, provided that at least one of R₂', R₃', R₆', R₇', R₁₀', R₁₁', R₁₄' and R₁₅' is an unsubstituted sulfamoyl group; R₁, R₄, R₅, R₈, R₉, R₁₂, R₁₃ and R₁₆ represent hydrogen atoms; and M' represents a proton, an alkaline metal ion, an alkaline earth metal ion and an onium ion of an organic amine or ammonium ion.)

22. A mixture of colorants obtained by subjecting 4-sulfophthalic acid derivatives, or a 4-sulfophthalic acid derivative and a phthalic acid (phthalic anhydride) derivative to reaction with a copper compound in the presence of a copper compound, followed by subjecting thus obtained compound or a salt thereof to reaction with a chlorinating reagent to convert a sulfonic acid group to a chlorosulfonyl group and subsequent reaction with an amidating reagent.
